# EUROPEAN PATENT APPLICATION

(11) **EP 4 552 463 A1**
(43) Date of publication of application: **14.05.2025**
(21) Application number: 23849413.2
(22) Date of filing: 01.08.2023
(51) Int. Cl.: A01D 34/00

(54) **INTELLIGENT LAWN MOWING APPARATUS**

(30) Priority: 01.08.2022 CN 202210915857; 01.08.2022 CN 202210914430; 01.08.2022 CN 202210915847; 17.03.2023 CN 202310264854
(71) Applicant: Ecovacs Robotics Co., Ltd., Suzhou, Jiangsu 215168 (CN)
(72) Inventor: CHEN, Peng, Suzhou, Jiangsu 215168 (CN); WU, Yongdong, Suzhou, Jiangsu 215168 (CN); YUAN, Peng, Suzhou, Jiangsu 215168 (CN); LI, Xiaofei, Suzhou, Jiangsu 215168 (CN)
(74) Representative: Renaudo, Adrien Hanouar
(86) International application number: PCT/CN2023/110545
(87) International publication number: WO 2024/027707

(57) **Abstract**

The present disclosure provides an intelligent mowing device. The intelligent mowing device comprises a device body including a front end and a rear end, an actuator is arranged on the device body; a first collection module arranged at the front end of the top of the device body, the first collection module includes a light-transmitting area and collects environmental information through the light-transmitting area; wherein, there is a first point on the first collection module and a second point of the top surface of the device body, the first point corresponds to a contour point at a bottom edge of the light-transmitting area, which is oriented towards the front end, the second point is the highest point of the top surface of the device body located in front of the first collection module; an angle between the line connecting the first point and the second point and the horizontal plane is greater than or equal to a first set acute angle. This ensures that the collection area is not blocked, the collected environmental data meets the operational needs of the device, and it also minimizes the risk of the first collection module getting damaged due to impacts.

## Description

### CROSS-REFERENCE TO RELATED APPLICATIONS

This disclosure claims priority benefits to Chinese Patent Applications listed in the table below, the contents of which are incorporated herein by reference.

| Application Date | Application Number | Application Title |
|---|---|---|
| 03/17/2023 | 202310264854.X | Intelligent Lawn Mowing Device |
| 08/01/2022 | 202210915847.7 | A Self-Moving Device |
| 08/01/2022 | 202210915857.0 | A Self-Moving Device |
| 08/01/2022 | 202210914430.9 | Intelligent Lawn Mower |

### TECHNICAL FIELD

This disclosure relates to the field of cleaning device, in particular to an intelligent mowing device.

### BACKGROUND

With the advancement of science and technology, a growing variety of automated device has been developed to reduce user's workload and enhance work efficiency. For instance, there are devices that require user operation, such as floor scrubbers and lawn mowers; and there are also some devices that do not require any user operation at all, such as cleaning robots, handling robots, mowing robots, etc. For intelligent devices or robots to achieve functions such as autonomous obstacle-avoidance and path planning, they must utilize collection modules installed on them to collect environmental information, for tasks such as obstacle detection, positioning and the like.

If the position of the collection module is not properly arranged, issues such as occlusion or signal interference can result in a lack of necessary environmental data, thereby affecting the accuracy of the subsequent actions performed by the device.

### Summary of the Disclosure

The embodiments of this disclosure provide an intelligent mowing device to offer a more feasible solution for reducing the impact of occlusion or signal interference.

A embodiment of the present disclosure provides an intelligent mowing device. The intelligent mowing device comprises:
a device body, on which an actuator is arranged, the device body has a front end and a rear end;
a first lens arranged at the front end of the top of the device body, the first lens includes a light-transmitting area and collects environmental information through the light-transmitting area,
wherein, there is a first point on the first lens and a second point of the top surface of the device body, the first point corresponds to a contour point at the bottom edge of the light-transmitting area, which is oriented towards the front end, and the second point is the highest point of the top surface of the device body located in front of the first lens;
an angle between the line connecting the first point and the second point and the horizontal plane is greater than or equal to a first set acute angle.

In another embodiment of this disclosure, another mowing device is provided. This mowing device comprises:
a device body with a front end and a rear end;
a first lens arranged at the front end of the top of the device body;
an actuator including a mowing motor and a mowing blade disc, wherein the mowing motor is configured to drive the mowing blade disc to operate;
a drive device including a drive motor and rear wheels, wherein the drive motor is configured to drive the rear wheels to move;
a battery for storing energy and providing electrical power;
a communication module arranged above the battery, the communication module is configured to provide the function of enabling the device body to communicate with external devices;
an antenna arranged at the rear end of the top of the device body;
wherein the first lens, the mowing motor, the drive motor, the battery, and the antenna are arranged in sequence from the front end to the rear end of the device body.

In the technical solution provided by an embodiment of this disclosure, the first lens is used to collect environmental information. In particular, the intelligent mowing device provided by an embodiment of this disclosure collects image information on the ground through the first lens. For example, information about grassy areas and/or non-grassy areas on the ground, as well as boundary information between grassy areas and non-grassy areas. In this way, for the intelligent mowing device provided by an embodiment of this disclosure, the first lens is arranged on the top of the device body and designed in a special manner to avoid situations where the first lens is unable to collect image information from the ground due to being blocked, thereby resulting in the lack of environmental information collected by the first lens. Specifically, in this embodiment, the angle between the line connecting the first point at the bottom edge of the light-transmitting area of the first lens and the second point - which is the highest point of the front end of the top surface of the device body - and the horizontal plane is greater than or equal to the first set acute angle. In this way, the first lens can remain unblocked within its collection area, thereby can collect image information from the ground, and the collected environmental information can meet the working requirements of the device body. Moreover, by limiting the angle between the line connecting the first point on the first lens and the second point on the device body and the horizontal plane to be greater than or equal to the first set acute angle, it indicates that the first lens is not arranged at the edge of the top of the device body. That is, there is a certain distance between the first lens and the edge of the top of the device body, thereby reducing the probability of the first lens being damaged by impacts.

In the intelligent mowing device provided by another embodiment of this disclosure, a first lens and an antenna are arranged. The first lens is used to collect environmental image information. The antenna can also be considered as a type of collection module, and the environmental information it collects consists of the communication signals sent by signal sources in the environment. In order to protect the first lens and the antenna from the influence of some interference sources (such as the mowing motor, the battery, the communication module, the drive motor used to drive the rear wheels to move, etc.) inherent in the intelligent mowing device, the antenna is arranged at the rear end of the top of the device body, and the first lens is arranged at the front end. Moreover, the first lens, the mowing motor, the drive motor, the battery, and the antenna are arranged in sequence from the front end to the rear end of the device body, that is, the antenna is kept away from the mowing motor, the drive motor and the battery. In this way, on the one hand, the structure of the device body is made more compact, and on the other hand, the interference of the interference sources on the antenna can be reduced.

In addition, intelligent mowing device typically utilizes antenna for device positioning. However, the antennas currently used on such intelligent mowing devices suffer from inadequate design, which adversely affects the ranging precision and ranging distance of the antenna, thereby impacting the realization of the positioning function of the intelligent mowing device.

To address this, the embodiments disclosed herein also provide an intelligent mowing device that not only helps ensure the ranging precision and ranging distance of the antenna components but also can enhance the obstacle-crossing ability of the intelligent mowing device.

This disclosure provides an intelligent mowing device comprising: a device body, which includes a shell with an upward-facing shell top surface; a drive device arranged on the device body and used to drive the movement of the device body; an actuator arranged on the device body and used to perform cutting tasks; an antenna device assembled on the device body, which extends upward from the device body and protrudes beyond the shell top surface; wherein the end of the antenna device away from the device body is a target end; the line connecting the target end and the highest point of the shell top surface forms a target angle with the central axis of the antenna device, with the target angle being between 60° and 75°.

In an embodiment of this disclosure, in the height direction, there is a first minimum distance between the target end and the shell. The first minimum distance D is greater than or equal to 60 mm.

In an embodiment of this disclosure, the first minimum distance is greater than or equal to 140 mm.

In an embodiment of this disclosure, the first minimum distance is less than or equal to 190 mm.

In an embodiment of this disclosure, the device body also comprises a first lens. The first lens is arranged to protrude from the side of the shell facing the target end, and in the height direction, there is a second minimum distance between the target end and the first lens. The second minimum distance is greater than or equal to 130 mm.

In an embodiment of this disclosure, the second minimum distance is less than or equal to 180 mm.

In an embodiment of this disclosure, in the height direction, there is a maximum distance between the target end and the drive device. The maximum distance is greater than or equal to 400 mm.

In an embodiment of this disclosure, the maximum distance is less than or equal to 450 mm.

In an embodiment of this disclosure, a travel direction perpendicular to the height direction is also defined for the device body. Further, the device body also comprises: a first lens; a heat sink component arranged adjacent to the first lens; and a mowing motor, wherein the first lens and the heat sink component are arranged on one side of the mowing motor in the travel direction, and the antenna device is arranged on the other side of the mowing motor in the travel direction.

In an embodiment of this disclosure, left and right directions perpendicular to the height direction are also defined for the device body. The device body further comprises: a mainboard; and a mowing motor, wherein the mainboard is arranged on one side of the mowing motor in the left or right direction, and the antenna device is arranged on the other side of the mowing motor in the right or left direction.

The beneficial technical effect brought of this disclosure is that: in contrast to existing technology, this disclosure provides an intelligent mowing device. At least a part of the antenna component of the intelligent mowing device is positioned outside the device body. Moreover, the end of the antenna component away from the device body is a target end, and the position on the shell that is closest to the target end in the height direction is the target position, the line connecting the target end and the target position forms a target angle with the central axis of the antenna device. In this disclosure, by setting the target angle to 60° to 75°, the height of the antenna component is optimally set. This not only ensures that there is sufficient distance between the target end of the antenna component and the shell of the intelligent mowing device, reducing the interference of the shell on the antenna signal, but also ensures the ranging precision and ranging distance of the antenna component, thereby ensuring the realization of the positioning function of the intelligent mowing device. Moreover, it can also prevent the height of the antenna component from being excessively high, thereby enhancing the obstacle-crossing ability of the intelligent mowing device.

Moreover, existing intelligent mowing devices are usually equipped with collection devices such as cameras and rangefinders, which are used to collect information about obstacles in the travel path. A main control unit analyzes the information about these obstacles to obtain information including but not limited to obstacle information and distance information. However, due to the limitations of the field-of-view angle of collection devices such as cameras and rangefinders, the image information or distance information that can be collected in front of the intelligent mowing device is not comprehensive enough. This may cause the intelligent mowing device to collide with obstacles during traveling, thereby affecting the working efficiency of the intelligent mowing device.

To address this, embodiments of the present disclosure provides an intelligent mowing device, comprising:
a device body;
a drive device, which is configured to drive the device body to move on a working surface;
an environmental detection device, which is configured to collect the environmental information in front of the device body, wherein the forward direction of the device body is considered as the front and the side opposite to the front as the back, wherein the environmental detection device is exposed from the front side wall of the device body, and wherein in the height direction perpendicular to the working surface, the environmental detection device gradually inclines backward from top to bottom of the device body, so that the field-of-view angle of the environmental detection device covers the working surface adjacent to the front of the device body.

In an embodiment of this disclosure, the environmental detection device includes a fixed base, as well as a lens unit and a ranging unit connected to the front side of the fixed base; the lens unit is configured to obtain image information, and the ranging unit is configured to obtain distance information; the lens unit, ranging unit, and fixed base are installed on the device body as a module.

In an embodiment of this disclosure, the environmental detection device includes a positioning base inclinedly arranged on the fixed base, and the lens unit and ranging unit are installed on the positioning base, and the central axis of the lens unit and ranging unit is perpendicular to the end surface of the positioning base; it also includes a light-transmissive mirror surface that encapsulates the lens unit and ranging unit in the positioning base.

In an embodiment of this disclosure, the light-transmissive mirror surface includes a transparent glass. A hardening coating is applied on the outer surface of the transparent glass, and/or, an AR anti-reflection coating is applied on the inner surface of the transparent glass.

In an embodiment of this disclosure, the light-transmissive mirror surface is configured to enable at least light with wavelengths of 420 ~ 1100 nm to pass through; the transmittance of the light-transmissive mirror surface is at least 93%.

In an embodiment of this disclosure, the ranging unit is a TOF optical module, which comprises:
a base board, on which a first light-shielding cavity formed by a first light-shielding side wall and a second light-shielding cavity formed by a second light-shielding side wall are arranged;
a transmitting terminal, which is arranged inside the first light-shielding cavity;
a receiving terminal, which is arranged inside the second light-shielding cavity;
wherein the first and second light-shielding cavities are configured to isolate the cross-talk between the transmitting terminal and the receiving terminal.

In an embodiment of this disclosure, the field-of-view angle of the TOF optical module in the horizontal direction of the end surface of the positioning base ranges from 90° to 100°, and the field-of-view angle in the normal direction of the end surface of the positioning base ranges from 70° to 80°.

In an embodiment of this disclosure, the lens unit is a fisheye lens, which is mounted on the base board. The fisheye lens, transmitting terminal, receiving terminal, and base board are integrally installed on the positioning base as a module.

In an embodiment of this disclosure, the field-of-view angle of the fisheye lens in the horizontal direction of the end surface of the positioning base ranges from 150° to 180°, and the field-of-view angle in the normal direction of the end surface of the positioning base ranges from 70° to 100°.

In an embodiment of this disclosure, the positioning base is provided with an opening that passes through its opposite sides, the base board is arranged in front of the positioning base, and a heat sink is also provided behind the positioning base; the heat sink passes through the opening and contacts the base board, or contacts the base board through a heat-conducting part.

In an embodiment of this disclosure, the device body comprises a base and a shell that forms an installation cavity on the base. The fixed base extends into the installation cavity and is fixed to the base, and the end surface of the positioning base is exposed through an opening set on the end surface of the front side wall of the shell.

In an embodiment of this disclosure, the front side wall of the shell corresponds to the position of the positioning base and has an inclined surface that matches the positioning base.

In an embodiment of this disclosure, a heat dissipation hole that communicates with the installation cavity is set on the front side wall of the shell.

In an embodiment of this disclosure, the front side wall of the shell comprises a first side wall corresponding to the position of the environmental detection device, and a second side wall located below the environmental detection device, wherein the second side wall inclines gradually towards the front of the device body from top to bottom.

In an embodiment of this disclosure, the environmental detection device is configured to be inclined at an angle of 10° to 20° relative to the normal line of the working surface.

In the intelligent mowing device of this embodiment, the environmental detection device is inclined gradually backwards the device body from top to bottom in the height direction perpendicular to the working surface, so that the field-of-view of the environmental detection device can cover the working surface adjacent to the front of the device body, which enables the environmental detection device to collect more comprehensive information in front of the device body, avoiding the performance loss caused by the field-of-view of the environmental detection device being oriented towards the sky, buildings, and the device body itself, and ensuring that the device body can safely travel on the working surface.

Moreover, existing intelligent mowing devices are usually equipped with image collection devices such as cameras, which are used to collect image information on the travel path or around the self-moving device, and a main control unit analyzes the image information to obtain information including but not limited to obstacle information, distance information, face recognition information, etc. However, due to the limitations of the field-of-view of image collection devices such as cameras, the images of the surrounding environment that can be collected are not comprehensive enough, which affects the work efficiency of the self-moving device and impairs the function of the self-moving device.

To address this, embodiments of this disclosure provides an intelligent mowing device, comprising:
a device body, which includes a base, and a first shell fixed on the base and forming an installation cavity with the base, wherein an operation surface is formed on the top of the first shell, and wherein the forward direction of the device body is considered as the front, and an opening is set at a position of the top of the first shell located in front of the operation surface;
a drive device configured to drive the device body to move on a working surface;
an environmental detection device configured to collect panoramic images around the device body, wherein the environmental detection device is fixed in the installation cavity and extends out from the opening of the first shell to a position higher than the operation surface of the first shell, and the environmental detection device is located on the front side of the device body and is configured so that its field-of-view facing the front of the device body deviates from the edge on the front side of the device body.

In an embodiment of this disclosure, the environmental detection device includes a fixed base, as well as a first lens connected to the top of the fixed base. The fixed base and the first lens are installed on the device body as a module.

In an embodiment of this disclosure, the first lens is vertically installed on the top of the fixed base, and the central axis of the first lens is perpendicular to the end surface of the top of the fixed base.

In an embodiment of this disclosure, the field-of-view angle of the first lens ranges from 40° to 100°.

In an embodiment of this disclosure, in the direction perpendicular to the forward direction of the device body, the first lens is located at the central position of the device body.

In an embodiment of this disclosure, charging electrode pieces are respectively arranged on the opposite sides of the first lens on the device body; in the forward direction of the device body, the positions of the first lens and the charging electrode pieces are arranged so that the central axis of the first lens perpendicular to the top of the fixed base corresponds to the charging electrode pieces.

In an embodiment of this disclosure, the operation surface of the top of the first shell is approximately planar.

In an embodiment of this disclosure, an installation base is arranged on the top of the fixed base. A sealing pad is arranged between the end of the first lens and the installation base. The first lens and the installation base are fixed by screws.

In an embodiment of this disclosure, the fixed base has an inner cavity. The installation base is provided with a through-hole for the first lens to pass through. The fixed base also includes a circuit board located in the inner cavity, which is communicatively connected to the first lens through a lead.

In an embodiment of this disclosure, the fixed base is approximately L-shaped, including a vertical section extending vertically relative to the base, and a horizontal section located at the lower end of the vertical section and extending horizontally relative to the base. The first lens is mounted on the top of the vertical section. The horizontal section is designed to be mounted on the base.

In an embodiment of this disclosure, an opening is set at the lower end of the horizontal section. There is a connecting base covering the opening at the lower end of the horizontal section. The circuit board is mounted on the connecting base. The connecting base is designed to be positioned and mounted on the base.

In an embodiment of this disclosure, heat dissipation fins are provided on the lower end surface of the connecting base.

In an embodiment of this disclosure, the fixed base is configured to be installed from the bottom of the device body, and the first lens on the fixed base is configured to pass through the opening of the top of the first shell after the connecting base is mounted on the base.

In an embodiment of this disclosure, the drive device includes front wheels and rear wheels set on the base. The first lens is positioned above the front wheels, and the first lens is perpendicular to the central axis of the top of the fixed base. The distance between said central axis and the rotational axis of the front wheels is less than 10 cm.

In an embodiment of this disclosure, a second shell is connected to the base. The second shell surrounds the first shell, and the first shell protrudes from the top of the second shell. The second shell gradually inclines outward the device body from the top to the bottom.

In an embodiment of this disclosure, the self-moving device is a self-moving lawn mower. An antenna device protruding from the end surface of the top of the device body is provided on the device body. The environmental detection device is only lower than the height of the antenna device of the top end surface of the device body.

The self-moving device of this embodiment can obtain 360° image information around the self-moving device by using the environmental detection device. This enables the self-moving device to realize functions such as human shape recognition and security protection by using the image information obtained by the environmental detection device, thereby broadening the application field of the self-moving device. Moreover, since the environmental detection device is located in front of the device body and the top operation surface, and its field-of-view deviates from the edge of the front side of the device body, the edge of the device body will not block the field-of-view of the environmental detection device. This allows the self-moving device to collect a more comprehensive panoramic view of the surrounding environment during operation, which can provide more comprehensive information for the control unit, thereby improving the intelligence of the self-moving device.

### BRIEF DESCRIPTION OF DRAWINGS

In order to more clearly illustrate the technical solutions in the embodiments of this disclosure or in the prior art, a brief instruction to the drawings required for the description of the embodiments or the prior art will be provided hereinafter. Obviously, the drawings described below are some of the embodiments of this disclosure. For those skilled in the art, other drawings can also be acquired based on these drawings without the need to engage in creative labors.
FIG.1a is the first structural schematic diagram of the mowing device according to one embodiment of the present disclosure;
FIG.1b is a partially enlarged view of FIG. 1a;
FIG.2 is the second structural schematic diagram of the mowing device according to one embodiment of the present disclosure;
FIG.3 is the third structural schematic diagram of the mowing device according to one embodiment of the present disclosure;
FIG.4 is the fourth structural schematic diagram of the mowing device according to one embodiment of the present disclosure;
FIG.5 is the fifth structural schematic diagram of the mowing device according to one embodiment of the present disclosure;
FIG.6 is a structural schematic diagram of the intelligent mowing device according to one embodiment of the present disclosure;
FIG.7 is a structural schematic diagram of the intelligent mowing device according to another embodiment of the present disclosure;
FIG.8 is a structural schematic diagram of the region A of the intelligent mowing device shown in FIG.7;
FIG.9 is a sectional structural schematic diagram of the intelligent mowing device shown in FIG.7 along the B-B direction;
FIG. 10 is a structural schematic diagram of the self-moving device according to this embodiment;
FIG. 11 is a structural schematic diagram of the base of the self-moving device according to this embodiment;
FIG.12 is a structural schematic diagram of the environmental detection device of the self-moving device according to this embodiment;
FIG. 13 is another structural schematic diagram of the environmental detection device of the self-moving device according to this embodiment;
FIG.14 is a front view of the environmental detection device of the self-moving device according to this embodiment;
FIG.15 is a sectional schematic diagram of the environmental detection device of the self-moving device according to this embodiment;
FIG.16 is a front view of the environmental detection device of the self-moving device according to this embodiment, wherein the environmental detection device is arranged on the device body;
FIG.17 is a sectional schematic diagram of the self-moving device according to this embodiment;
FIG.18 is a partially enlarged view of FIG.15;
FIG.19 is a partially enlarged view of FIG.13;
FIG.20 is a partially enlarged view of FIG.17;
FIG.21 is a schematic structural diagram of the self-moving device according to this embodiment;
FIG.22 is a structural schematic diagram of the base of the self-moving device according to this embodiment;
FIG.23 is a structural schematic diagram of the detection component of the self-moving device according to this embodiment;
FIG.24 is a sectional schematic diagram of the detection component in FIG.23;

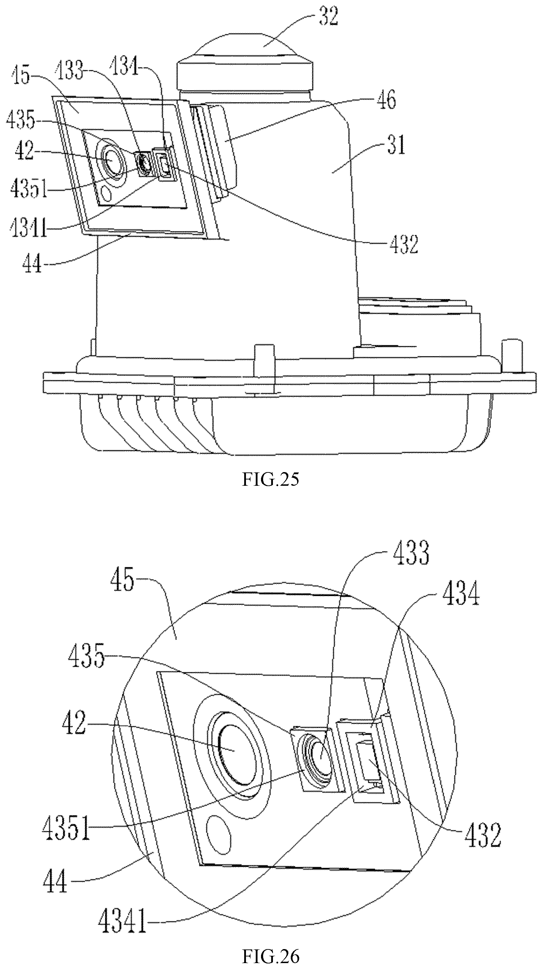

FIG.25 is a structural schematic diagram of the detection component of the self-moving device from another angle according to this embodiment;
FIG.26 is a partially enlarged view of the detection component shown in FIG.25;

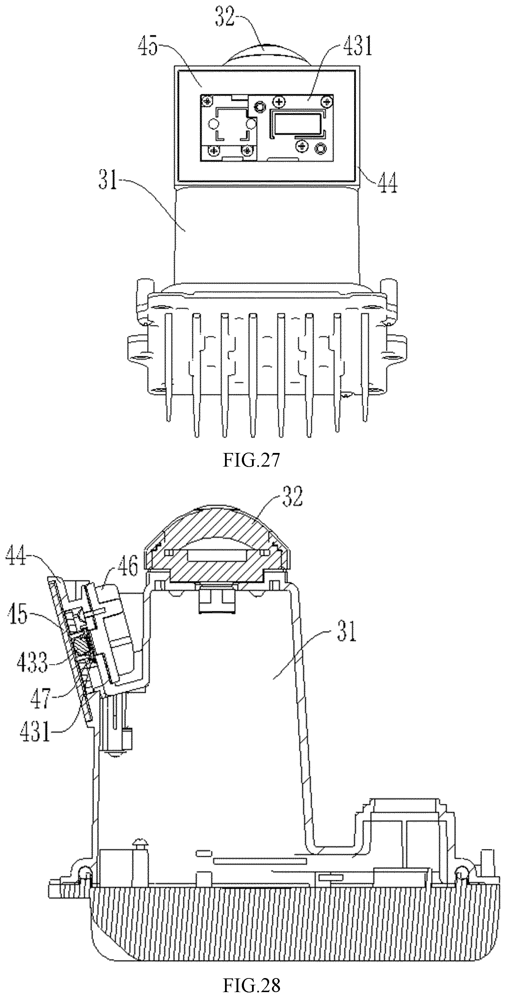

FIG.27 is a front view of the detection component of the self-moving device according to this embodiment;
FIG.28 is a sectional schematic diagram of the detection component in another position of the self-moving device of this embodiment;
FIG.29 is a partially enlarged view of the detection component shown in FIG.28;
FIG.30 is a front view of the self-moving device according to this embodiment;
FIG.31 is a schematic diagram of the field-of-view angle of the first lens in the self-moving device of this embodiment;
FIG.32 is a sectional schematic diagram of the self-moving device according to this embodiment;
FIG.33 is another sectional schematic diagram of the self-moving device according to this embodiment;
FIG.34 is a partially enlarged view of the detection component shown in FIG.33;
FIG.35 is another structural schematic diagram of the self-moving device of this embodiment.

In these drawings:
100. horizontal plane;
1. device body; 11. base; 12. shell; 121. heat dissipation hole; 122. first side wall; 123. second side wall; 124. first shell; 131. second shell; 126. shell top surface; 111. first inclined surface; 112. second inclined surface; 13. third inclined surface; 114. charging electrode piece;
2. drive device; 21. front wheel; 22. rear wheel; 61. drive motor;
3. environmental detection device; 31. fixed base; 311. installation base; 3111. through hole; 312. sealing pad; 313. screw; 314. inner cavity; 315. vertical section; 316. horizontal section; 32. first lens; 33. connecting base; 35. circuit board; 42. fisheye lens; 43. TOF optical module; 431. base board; 432. transmitting terminal; 433. receiving terminal; 434. first light-shielding side wall; 4341. first light-shielding cavity; 435. second light-shielding side wall; 4351. second light-shielding cavity; 44. positioning base; 45. light-transmissive mirror surface; 14. heat sink component; 46. heat sink; 47. heat-conducting part; 32. first lens; 212. non-transparent area; 211. transparent area;
7. battery; 8. communication module; 16. mainboard; 18. actuator; 181. mowing motor; 182. mowing blade disc; 5. antenna; 20a. target end; 27. antenna cavity; 30. antenna component; 36. antenna module; 37. feeder line.

### DESCRIPTION OF EMBODIMENTS

In order to make the objectives, technical solutions, and advantages of the present disclosure clearer, the technical solutions of the present disclosure are clearly and completely described below with reference to specific embodiments and corresponding accompanying drawings. Obviously, the embodiments described only refer to some, but not to all, embodiments of the present disclosure. Based on the embodiments in the present disclosure, all other embodiments obtained by those skilled in the art without paying any creative labors will fall within the protection scope of the present disclosure.

It should also be noted that the terms "comprise", "include" or any other variant thereof are intended to cover a non-exclusive inclusion, so that a process, method, article or device including a series of elements comprises not only those elements, but also other elements not explicitly listed, or elements inherent to such process, method, article or device. Without other specific limitation, an element defined by the statement "including a/an......" does not preclude the presence of one or more identical elements in the process, method, article, or device that comprises said element.

An intelligent mowing device can also be called intelligent lawn mower, intelligent grass cutter, intelligent weeder, intelligent lawn trimmer, and so on. The intelligent lawn mower can move autonomously, prevent collisions, automatically return to charge within the working range; has safety monitoring and battery level monitoring capabilities; and also has certain climbing, obstacle-crossing, and obstacle-avoidance abilities, etc. The intelligent lawn mower has, but is not limited to, the following features: automatic mowing, cleaning up grass clippings, automatic rain avoidance, automatic charging, automatic obstacle avoidance, automatic boundary recognition, network control, and so on. Using a lawn mower to trim the lawn can greatly reduce the workload and also ensure the evenness of the lawn trimming. The working principle of the lawn mower is mainly to cut the lawn through a cutting blade. The cutting blade can be a disc-type cutter, or other forms such as a linear cutter, scissor-type cutter, etc., which are not limited in embodiments of this disclosure. The cutting blade can be driven by the mowing motor to perform the cutting action.

The robot provided by the following embodiments of this disclosure can be the above-mentioned mowing robot, or it can be a cleaning robot (such as an outdoor cleaning robot), a guide robot (such as a robot used to provide guidance services in public places such as hotels or banks), and so on.

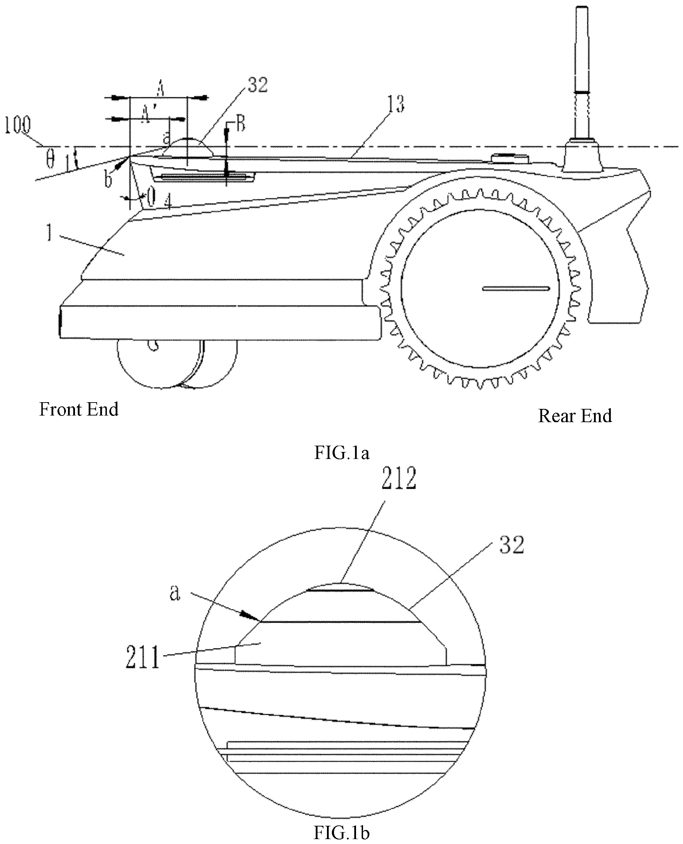

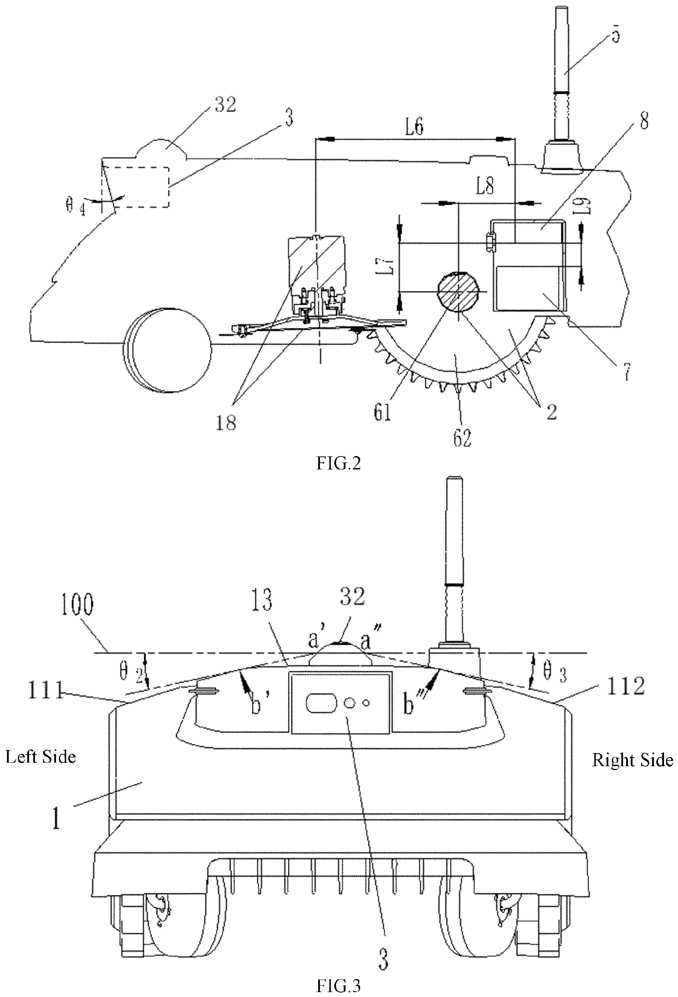

FIGS. 1a, 2 and 3 show the structural schematic diagrams of the mowing device according to one embodiment of the present disclosure. As shown in FIG.1a and FIG.2, the intelligent mowing device includes a device body 1 and an environmental detection device 3. The environmental detection device 3 can collect environmental information in front of the device body 1 during its movement, such as obstacle image information, obstacle distance information, human shape recognition, etc. The collected environmental information can be sent to the control unit of the device body 1, which can process the information collected by the environmental detection device 3 to provide security for the control of the self-moving device.

The device body 1 comprises a shell 12. The shell 12 forms a cavity to accommodate other components of the intelligent mowing device 10 and protects these other components of the intelligent mowing device 10.

Referring to FIGS.1a and 2, the front side wall of the device body 1 is an inclined surface that inclines downward and backward from the top edge of the front end of the device body 1. The environmental detection device 3 is arranged on the front side wall. By arranging the environmental detection device 3 on the inclined front side wall, the field-of-view of the environmental detection device 3 can cover the working surface adjacent to the front of the device body 1. When the device body moves on a working surface, the environmental detection device 3 is inclined at the front of the device body 1, this helps to make the field-of-view of the environmental detection device 3 cover the working surface adjacent to the front of the device body 1, thereby reducing the detection blind area of the environmental detection device 3 near the intelligent mowing device. It ensures that the interference from shell 12 and other components of the intelligent mowing device on the field-of-view is minimized. With a well-designed overall structure, the environmental detection device 3 maximizes its AI recognition and obstacle-avoidance functions, thereby preventing performance loss that would otherwise occur if most of its field-of-view were oriented towards buildings or the sky. Moreover, it can also reduce the adhesion of dust or rainwater.

As shown in FIGS. 1a and 2, the included angle θ₃ between the front side wall and the vertical plane is less than or equal to a second set acute angle. The second set acute angle can be any value from 1 to 40 degrees (including boundary values). For example, the second set acute angle is 30 degrees.

In this embodiment, the environmental detection device 3 extends to the top of the device body 1 and is located on the end surface on the front side of the device body 1. As a result, at a position to the rear of the device body 1, the field-of-view of the environmental detection device 3 is partially blocked. During the operation of the intelligent mowing device, the information collected in the travel direction is more important than the information collected behind the intelligent mowing device. This is because the intelligent mowing device may collide with people or objects, or may cause other safety accidents, during the travel process. Therefore, by extending the environmental detection device 3 to the top of the device body 1 and locating it on the end surface on the front side of the device body 1, and making its field-of-view facing the front of the device body 1 deviate from the edge of the front side of the device body 1, it can ensure that the environmental detection device 3 collects comprehensive images of the front side of the device body 1, which is beneficial for the control unit to process the images of that area and obtain more accurate security information. Although the environmental detection device 3 is partially blocked at a position to the rear of the device body 1, it does not affect the safe operation of the intelligent mowing device.

In an embodiment disclosed in this disclosure, the environmental detection device 3 comprises a lens unit and a ranging unit, wherein the lens unit is used to collect image information in front of the device body 1, and the ranging unit is used to measure the distance information of objects in front of the device body 1. The control unit can determine the obstacles in front of the device body 1 based on the image information collected by the lens unit and the distance information measured by the ranging unit, thereby improving the safety of the self-moving device. Obviously, for those skilled in the art, the control unit can also perform AI recognition based on the image information obtained by the lens unit, thereby enhancing the intelligence of the self-moving device.

The intelligent mowing device can perform corresponding operations on outdoor lawns. The lens unit can obtain image information from a specific area in front of the self-moving lawn mower in real-time or at a predetermined interval, and the ranging unit is used to measure the distance information of objects in front of the self-moving lawn mower, so that the self-moving lawn mower can recognize the surrounding environment, enhancing the ability of the intelligent mowing device to work independently outdoors.

Taking the forward direction of the device body 1 as the front, with the opposite side designated as the back, the environmental detection device 3 is exposed from the front side wall of the device body 1. During the movement of the intelligent mowing device, the environmental detection device 3 can collect environmental information in front of the device body 1. The environmental information collected by the environmental detection device 3 can be sent to the control unit of the device body 1, the control unit can process this information. For example, the control unit can perform AI recognition based on the environmental information, such as human shape recognition, object recognition, etc., and can also detect the distance to the obstacles in front based on the environmental information. This can enhance the security and obstacle-avoidance capabilities of the intelligent mowing device, allowing it to operate independently outdoors and enhancing its intelligence. Obviously, for those skilled in the art, the control unit can also obtain other information based on the environmental information, such as positioning signals, which are not specifically explained here.

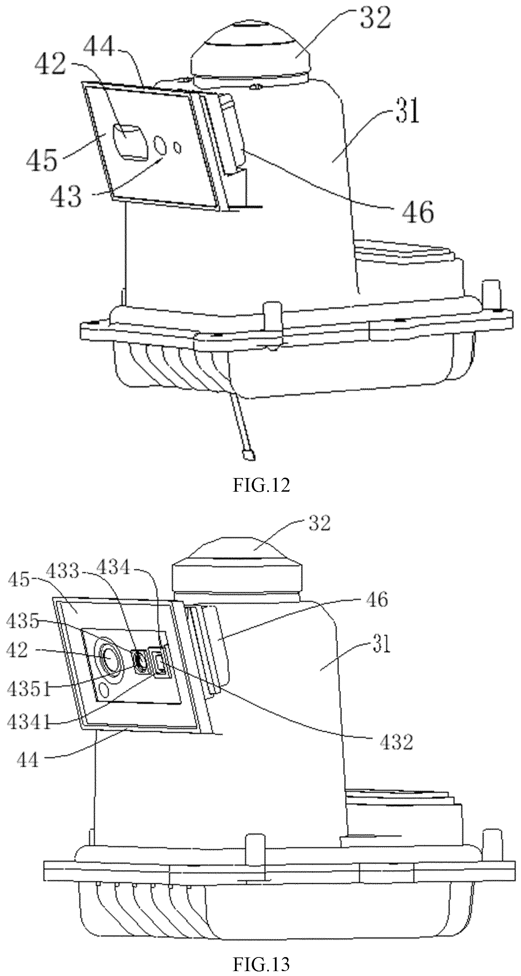

In this embodiment, the environmental detection device 3 is gradually inclined towards the rear of device body 1 from top to bottom in the vertical direction perpendicular to the working surface. Referring to the viewing direction of FIG. 13, the upper end of the environmental detection device 3 is located at a position in front of its lower end, which allows the end surface of the environmental detection device 3 to be inclined towards the direction of the working surface, enabling the field-of-view of the environmental detection device 3 to cover the working surface adjacent to the front of device body 1. In this embodiment, the inclined arrangement of the environmental detection device 3 can ensure that the detection range of the environmental detection device 3 encompasses critical areas as much as possible, such as the working surface in front of device body 1. The closer the detected working surface is to device body 1, the better, thereby minimizing the detection blind spots of the environmental detection device 3 near the intelligent mowing device. This minimizes interference of device body 1 and other parts of the intelligent mowing device with the field-of-view angle, and optimizes the AI recognition and obstacle-avoidance functions of the environmental detection device 3 to the greatest extent possible within the constraints of the overall machine structure. Additionally, it prevents the main detection range of the environmental detection device 3 from being oriented towards irrelevant areas, such as the sky or distant buildings, avoiding a loss in performance of the environmental detection device 3.

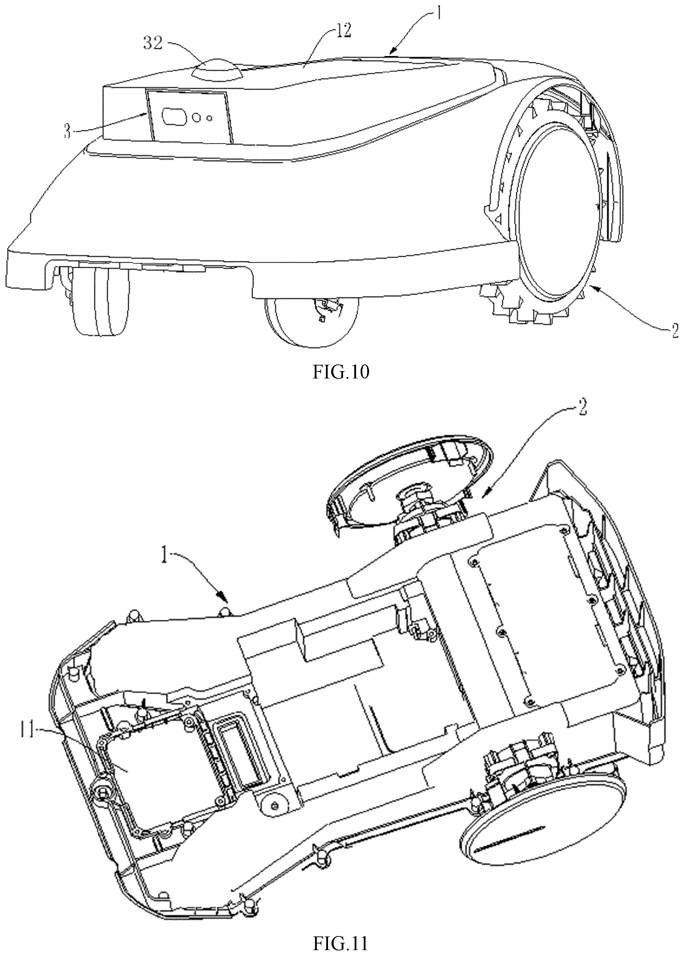

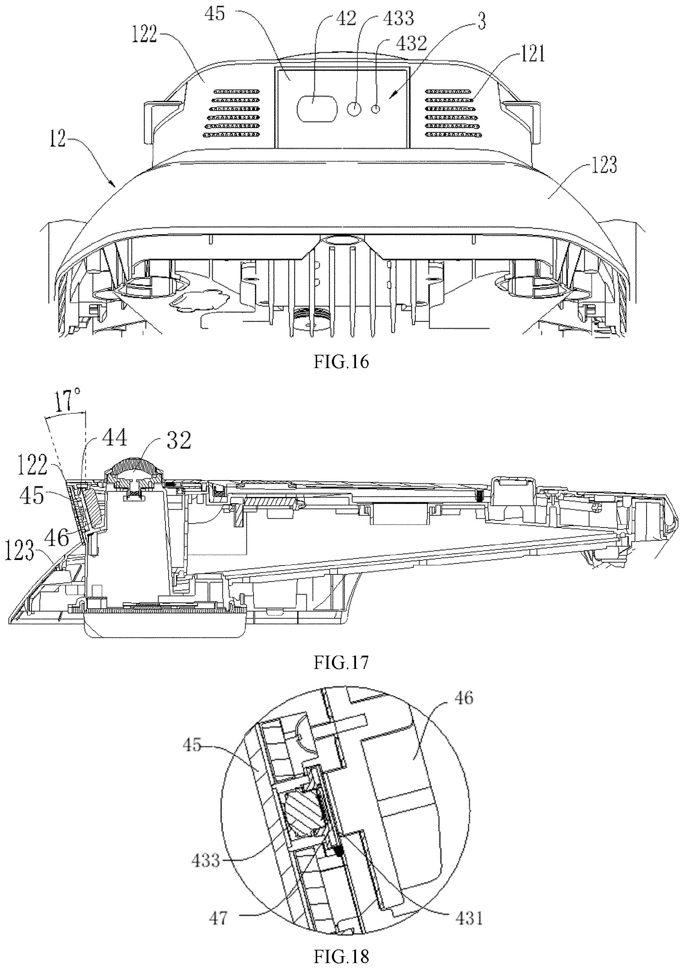

In an embodiment of this disclosure, referring to FIGS.10 and 17, the environmental detection device 3 is configured to be inclined at an angle of 10° to 20° relative to the normal line of the working surface. With such an arrangement, the environmental detection device 3 maximizes the utilization of its field-of-view angle, allowing it to cover the working surface adjacent to the front of device body 1. It can more comprehensively collect environmental information in front of device body 1 during its movement.

In an embodiment of this disclosure, referring to FIGS. 10 and 12, the environmental detection device 3 includes a fixed base 31, as well as a lens unit and a ranging unit connected to the front side of the fixed base 31. The lens unit can be a wide-angle lens, etc., used to collect image information in front of device body 1. The ranging unit can be a laser ranging device, etc., used to obtain distance information. When the device body 1 travels on the working surface, image information in front of device body 1 can be obtained by the lens unit, and distance information of obstacles in front of device body 1 can be obtained by the ranging unit. The control unit can control the intelligent mowing device to avoid obstacles based on image information and distance information, preventing the intelligent mowing device from colliding with obstacles. Obviously, it is also possible that the control unit can perform AI recognition based on image information, such as human shape recognition, obstacle recognition, etc., which are not specifically explained here.

In an embodiment of this disclosure, referring to FIG. 12, the lens unit, ranging unit, and fixed base 31 are installed on the device body 1 as a module. The lens unit and ranging unit are pre-installed on the fixed base 31 to form an environmental detection device 3. Installing the three as a module on the device body 1 is beneficial for the calibration and assembly of the ranging unit and lens unit, thereby ensuring the installation precision of the ranging unit and lens unit on the device body 1. The installation precision of the ranging unit and lens unit is typically high. If the ranging unit and lens unit are directly installed on the device body 1, specialized device is required to calibrate the ranging unit and lens unit, which is challenging and demands high technical expertise. However, in the intelligent mowing device of this embodiment, the lens unit, ranging unit, and fixed base 31 are installed on the device body 1 as a module, as long as the positioning between the fixed base 31 and the device body 1 is ensured, thereby the installation is simplified.

In an embodiment of this disclosure, referring to FIG. 12, the environmental detection device 3 also includes a positioning base 44 inclinedly arranged on the fixed base 31. The positioning base 44 is gradually inclined towards the rear of the device body 1 from top to bottom in the vertical direction perpendicular to the working surface. The positioning base 44 is fixedly connected to the fixed base 31. The fixed connection can be achieved by using bolts, or alternative methods such as clamping, adhesive bonding, integral molding, and other fixed connection techniques known to those skilled in the art. This embodiment is not limited to any specific connection method. The positioning base 44 can be used to install the lens unit and ranging unit. After installation, the central axis of the lens unit and ranging unit is perpendicular to the end surface of the positioning base 44. With this arrangement, the field-of-view angles of both can be aligned with the working surface adjacent to the forward direction of the device body 1.

In an embodiment of this disclosure, referring to FIG. 12, in order to prevent the lens unit and ranging unit from directly contacting the external environment while the intelligent mowing device is in operation, a light-transmissive mirror surface 45 is provided on the positioning base 44. The light-transmissive mirror surface 45 and positioning base 44 are fixedly connected to each other. The fixed connection can be achieved by clamping, adhesive bonding and other connection techniques known to those skilled in the art. This embodiment is not limited to any specific connection method. The light-transmissive mirror surface 45 is arranged on the side of the positioning base 44 facing the front of the device body 1. During installation, the lens unit and ranging unit are first installed to the positioning base 44, and then the light-transmissive mirror surface 45 is installed to the positioning base 44. Once the installation of the light-transmissive mirror surface 45 is complete, it forms a cavity with the positioning base 44, enclosing the lens unit and ranging unit within this cavity. This prevents the lens unit and ranging unit from directly contacting the external environment, and also stops dust, water vapor, and other impurities from entering the lens unit and ranging unit, thereby protecting their internal circuits from damage.

In an embodiment of this disclosure, referring to FIGS. 10 and 12, in order to prevent the field-of-view angle of the environmental detection device 3 from being blocked by the shell 12, the front side wall of the shell 12 corresponds to the position of the positioning base 44 and also has an inclined surface that matches the positioning base 44. That is, the angle and direction of inclination of the front side wall are approximately the same as those of the positioning base 44, for example, they can be flush with the exposed end surface of the positioning base 44.

When installing the environmental detection device 3, the fixed base 31 is first extended into the installation cavity and fixed to the base 11. This fixed connection can be achieved by using bolts, or alternative methods such as clamping, adhesive bonding, and other fixed connection techniques known to those skilled in the art. This embodiment is not limited to any specific connection method. In order to ensure the installation precision between the fixed base 31 and the base 11, a positioning structure can be arranged on the base 11. The fixed base 31 is pre-positioned through the positioning structure, and then the installation of the two is fixed by means known to those skilled in the art. When the fixed base 31 is connected to the base 11, the end surface of the positioning base 44 is exposed through an opening set on the front side wall end surface of the shell 12, which facilitates the environmental detection device 3 to collect environmental information in front of the device body 1 without being interfered by the shell 12 during the collection process.

In order to enable the environmental detection device 3 to collect more complete and comprehensive images of the surrounding environment. Taking the forward direction of the device body 1 as the front, with the opposite side designated as the back, the environmental detection device 3 is arranged at the end surface of the top of the front side of the device body 1, and the field-of-view angle of the environmental detection device 3 facing the front of the device body 1 deviates from the edge of the front side of the device body 1. This ensures that the field-of-view angle of the environmental detection device 3 facing the front of the device body 1 is not blocked by the edge of the device body 1, which refers not only to the edge of the shell 12 but also to the edge of the base 11. This can improve the image collection capability of the environmental detection device 3 in the forward direction of the intelligent mowing device, avoiding safety accidents such as collisions with people during the movement of the intelligent mowing device.

The device body 1 has a specific size, and the environmental detection device 3 is installed at the front of the device body 1. The rear part of the device body 1 partially blocks the field-of-view angle of the environmental detection device 3. This is because, as the device body 1 moves, the panoramic image in front of the moving device body 1 is more critical. Information such as obstacle details or human figures is essential to ensure the safety of the intelligent mowing device itself and personal safety during its forward movement. The importance of the image from the rear of the device body 1 is relatively low. If the environmental detection device 3 were installed at the rear of the device body 1, its field-of-view oriented towards the front of the device body 1 will inevitably be blocked by the device body 1 itself, thereby affecting the collection of panoramic images in front of the device body 1, and thus not conducive to the processing of these panoramic images. Additionally, the environmental detection device 3 positioned on the top of the device body 1 can also provide a superior collection perspective, enabling the environmental detection device 3 to collect a more complete and comprehensive panoramic image of the surrounding environment.

In an embodiment of this disclosure, the environmental detection device 3 extends to the end surface of the top of the device body 1, enabling the environmental detection device 3 to be positioned at a high point of the intelligent mowing device, thereby increasing the collection range of the environmental detection device 3. In an embodiment of this disclosure, an antenna 5 (not shown in the figure) is also provided on the device body 1, which extends out of the end surface of the top of the device body 1, and the intelligent mowing device communicates with the outside through antenna 5. Here, the environmental detection device 3 is only lower than the height of the antenna 5 on the end surface of the top of the device body 1, which can ensure the installation height of the environmental detection device 3 and avoid the environmental detection device 3 being blocked by any structures other than the antenna 5. Moreover, since the antenna 5 is rod-shaped, even if the antenna 5 blocks the collection range of the environmental detection device 3, this blockage is limited in the overall panoramic image and does not affect the processing of the panoramic image by the control unit.

Refer to FIGS. 10, 11, 12, and 21-23, the shell 12 includes a first shell 124 and a second shell 131 that are connected vertically. The first shell 124 and the base 11 enclose an installation cavity for installing the environmental detection device 3. An opening is provided on the side wall surface of the first shell 124 facing the front of the device body 1, facilitating the exposure of the environmental detection device 3 from the shell 12 after installation is completed. For sealing purposes, a sealing glue or sealing pad can also be provided between the opening and the environmental detection device 3, which is not specifically described here. An operation surface is formed on the top of the first shell 124, allowing users to operate the intelligent mowing device through this operation surface. Of course, functions familiar to those skilled in the art, such as display, touch screen, touch button, etc., can also be set on this operation surface. At the top of the first shell 124, an opening is provided in front of the operation surface. After the environmental detection device 3 is installed in the installation cavity, it can extend out of the first shell 124 through the opening and extend above the operation surface of the first shell 124, thereby preventing the environmental detection device 3 from being interfered by the first shell 124 and the operation surface during image collection.

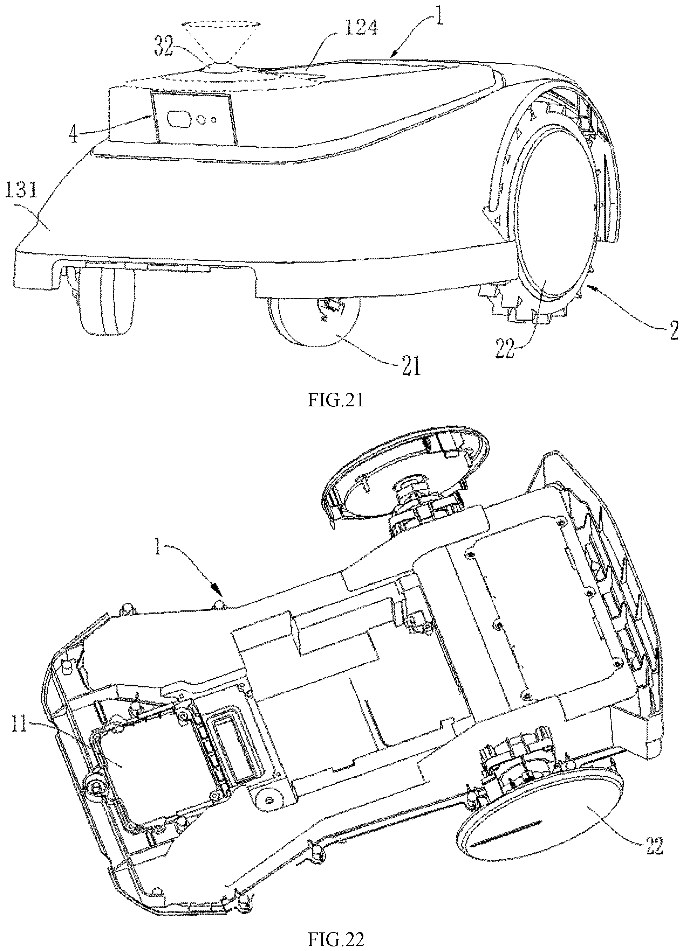

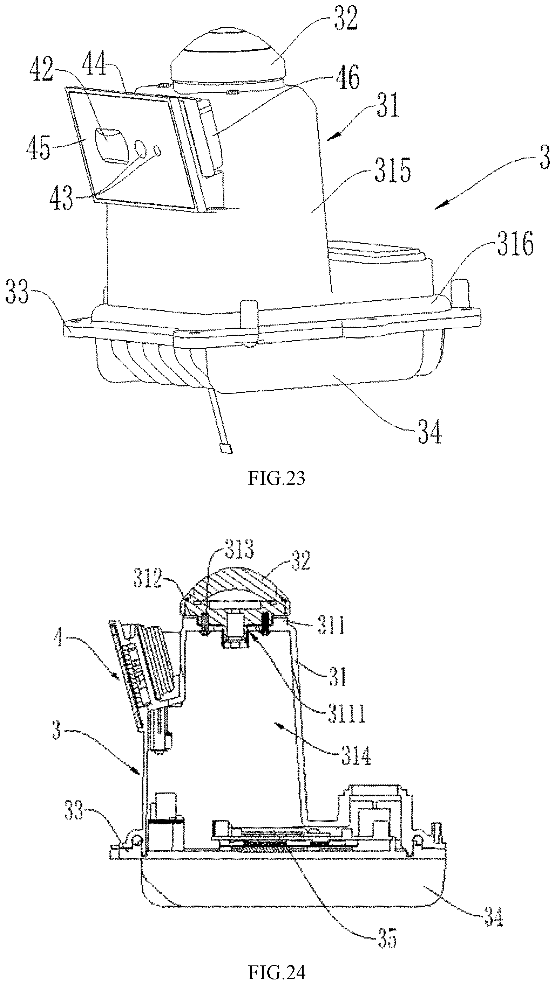

In a specific embodiment of this disclosure, referring to FIGS.21 and 23, the operation surface of the top of the first shell 124 is approximately planar. With this arrangement, after installation is completed, the environmental detection device 3 protrudes through the opening to a position above the operation surface of the top of the first shell 124, and the approximately planar operation surface will not block the field-of-view angle of the environmental detection device 3, facilitating the environmental detection device 3 to more comprehensively collect the panoramic image of the surrounding environment.

The environmental detection device 3 extending to the operation surface of the top of the first shell 124 can collect panoramic images of the surrounding environment during the movement of the device body 1. The environmental detection device 3 can send the collected panoramic images to the control unit in the device body 1 for further processing these panoramic images. For example, the control unit can perform AI recognition based on the panoramic images, such as human shape recognition, thereby improving the security capability of the intelligent mowing device, enabling it to work independently outdoors, and enhancing the anti-theft capability of the intelligent mowing device. Obviously, for those skilled in the art, the control unit can also obtain other information based on the panoramic images, such as positioning signals, which are not specifically explained here.

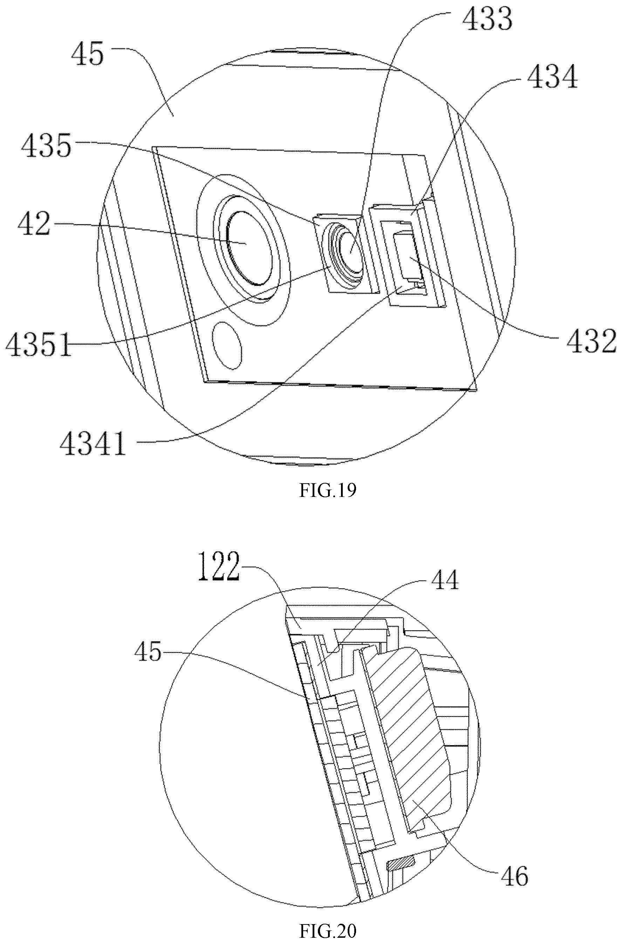

In a specific embodiment of this disclosure, referring to FIG.16, the front side wall of the shell 12 includes a first side wall 122 corresponding to the position of the environmental detection device 3, and a second side wall 123 located below the environmental detection device 3. An opening is provided on the first side wall 122 for the positioning base 44 to expose the shell 12, and it is aligned with the inclination direction of the environmental detection device 3. The inclination direction of the second side wall 123 is opposite to that of the first side wall 122, and it gradually inclines towards the front of the device body 1 from top to bottom. Referring to FIGS.17 and 20, with such a structural arrangement, the field-of-view angle of the lens unit and ranging unit in the environmental detection device 3 will not be blocked, facilitating the environmental detection device 3 to collect more comprehensive environmental information in front of the device body 1. Additionally, it can also ensure that there is sufficient installation space below the second side wall 123 for installing other components of the intelligent mowing device.

In an embodiment of this disclosure, referring to FIG. 12, the lens unit is a fisheye lens 42, the image information in front of the device body 1 can be collected through this fisheye lens 42. Since the fisheye lens 42 has a large field-of-view angle, it can collect more comprehensive image information. The ranging unit is a TOF optical module 43, the distance between the device body 1 and obstacles in front of it can be measured through this TOF optical module 43. Since the TOF optical module 43 has strong anti-interference ability and can directly output distance information, it can make the distance measurement more accurate.

In an embodiment of this disclosure, the light-transmissive mirror surface 45 needs to meet the information collection requirements of the fisheye lens 42 and the TOF optical module 43. The light-transmissive mirror surface 45 includes transparent glass, and an AR anti-reflection coating is applied on the inner surface of the transparent glass. By applying the AR anti-reflection coating, the light transmittance of the entire light-transmissive mirror surface 45 can be improved to meet the usage requirements of the fisheye lens 42 and the TOF optical module 43. In an embodiment of this disclosure, the light-transmissive mirror surface 45 allows light with wavelengths ranging from 420 to 1100 nm to pass through, and the light transmittance of the light-transmissive mirror surface 45 is at least 93%. This ensures that the light from the fisheye lens 42 and the TOF optical module 43 can pass through the light-transmissive mirror surface 45 for information collection without affecting the performance of the fisheye lens 42 and the TOF optical module 43. The AR anti-reflection coating can be formed on the transparent glass employing materials and processes known to those skilled in the art, which is not specifically explained here in this embodiment. Of course, the AR anti-reflection coating can be applied only to the inner surface of the transparent glass, or it can also be applied to both the inner and outer surfaces of the transparent glass, which is not specifically limited in this embodiment.

In an embodiment of this disclosure, a hardening coating is applied on the outer surface of the transparent glass. By applying the hardening coating, the hardness of the light-transmissive mirror surface 45 can be increased. The hardening coating can be formed on the transparent glass using materials and processes known to those skilled in the art, which is not specifically explained here in this embodiment. Improving the hardness of the outer surface of the light-transmissive mirror surface 45 is beneficial for protecting the light-transmissive mirror surface 45 and avoiding damage from weeds, branches, or other foreign objects in the working environment. Additionally, when such light-transmissive mirror surface 45 is cleaned, the increased hardness also helps prevent its outer surface from being scratched by the bristles.

In an embodiment of this disclosure, referring to FIGS.12 and 17, the field-of-view angle of the TOF optical module 43 in the horizontal direction on the end surface of the positioning base 44 ranges from 90° to 100°, and the field-of-view angle in the normal direction on the end surface of the positioning base 44 ranges from 70° to 80°. The field-of-view angle of the fisheye lens 42 in the horizontal direction of the end surface of the positioning base 44 ranges from 150° to 180°, and the field-of-view angle in the normal direction of the end surface of the positioning base 44 ranges from 70° to 100°. A larger field-of-view angle can give the fisheye lens 42 and the TOF optical module 43 a wider field of vision, making the collected information more comprehensive. Moreover, the arrangement of the fisheye lens 42 and the TOF optical module 43 ensures that their field-of-view angles cover the working surface in front of the adjacent device body 1, while also preventing these field-of-view angles from being blocked by the second side wall 123 of the shell 12.

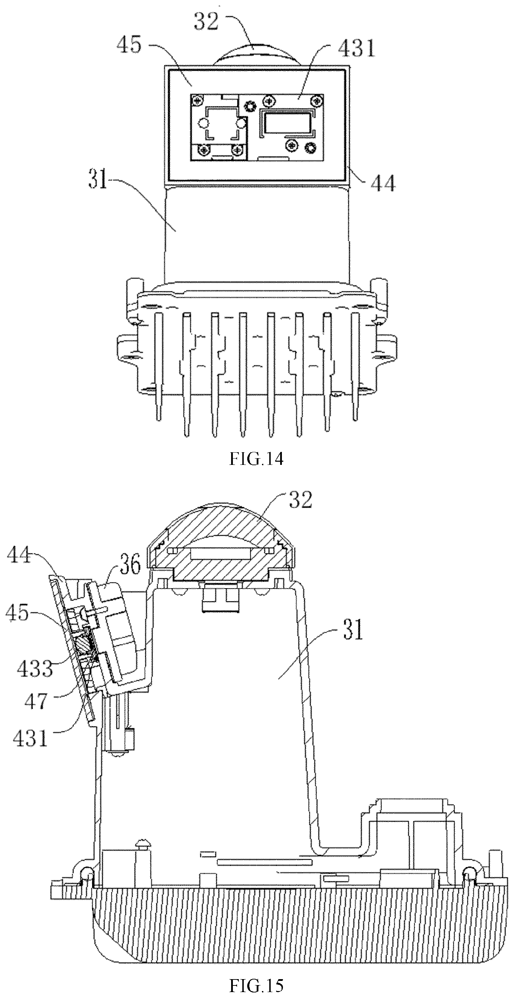

In an embodiment of this disclosure, referring to FIGS.13 and 14, the TOF optical module 43 comprises a base board 431, a transmitting terminal 432, and a receiving terminal 433. The base 11 is used to install the transmitting terminal 432 and the receiving terminal 433, and can also be used to install the fisheye lens 42. The transmitting terminal 432 can emit lasers outward, and the receiving terminal 433 can receive the lasers reflected back by obstacles in front, thereby enabling the calculation of the distance between the device body 1 and the obstacles in front. Moreover, by installing the transmitting terminal 432, the receiving terminal 433, and the fisheye lens 42 on the base board 431, this allows all four components to be installed on the positioning base 44 as a module during installation. This eliminates the need for calibration of the base board 431, transmitting terminal 432, receiving terminal 433, and fisheye lens 42 on the positioning base 44 during installation, thereby simplifying the installation process.

In practical applications, the light emitted by the transmitting terminal 432 may be directly received by the receiving terminal 433, or it may be reflected by the light-transmissive mirror surface 45 and then received by the receiving terminal 433, causing the TOF optical module 43 to obtain incorrect information. To solve the aforementioned cross-talk problem, in an embodiment of this disclosure, referring to FIGS. 13, 14, and 19, a first light-shielding side wall 434 is provided on the base board 431, forming a first light-shielding cavity 4341, and a second light-shielding side wall 435 forms a second light-shielding cavity 4351. The first light-shielding side wall 434 has a rectangular shape, and the first light-shielding cavity 4341 it forms is positioned outside the transmitting terminal 432, so that the transmitting terminal 432 is enclosed within it. When the transmitting terminal 432 emits laser, the first light-shielding side wall can block the divergent light, preventing it from reaching the receiving terminal 433. The second light-shielding side wall 435 is also rectangular, and the second light-shielding cavity 4351 it forms is positioned outside the receiving terminal 433, so that the receiving terminal 433 is enclosed within it. When cross-talk light is oriented towards the receiving terminal 433, it can be blocked from entering the receiving terminal 433, thereby preventing the control unit from making incorrect judgments caused by the receiving terminal 433 receiving cross-talk light. Furthermore, to avoid interference from external ambient light on the transmitting terminal 432, the receiving terminal 433, and the fisheye lens 42, a light-shielding layer can be applied to the light-transmissive mirror surface 45, with only light-transmitting openings corresponding to the transmitting terminal 432, the receiving terminal 433, and the fisheye lens 42 remaining.

In practical applications, both the fisheye lens 42 and the TOF optical module 43 generate a significant amount of heat when in operation. Failure to cool them in time may result in overheating damage. To solve the above problem, in an embodiment of this disclosure, referring to FIGS.12, 15, and 18, the positioning base 44 is provided with openings that pass through its opposite sides, the base board 431 is arranged in front of the positioning base 44, and a heat sink 46 is also provided behind the positioning base 44. Multiple heat sinks 46 can be uniformly arranged behind the positioning base 44, forming a heat sink assembly 14. The specific number and arrangement of the heat sinks 46 can be determined according to the actual situation, and this embodiment does not place any restrictions on this. The heat sink 46 can be made of metal material (such as copper, aluminum, and other metals), which has good thermal conductivity and is conducive to the dissipation of heat.

In this embodiment, the heat sink 46 passes through the opening and contacts the base board 431. When the fisheye lens 42 and the TOF optical module 43 are in working state and generate a significant amount of heat, the heat is first transferred to the base board 431, and subsequently, the base board 431 transfers the heat to the adjacent heat sink 46. Via the heat sink 46, the generated heat can be dissipated in time to avoid overheating and damage to the fisheye lens 42 and the TOF optical module 43 during operation. The heat sink 46 can also be in contact with the base board 431 via a heat-conducting part 47, which can be made of materials such as thermal conductive glue. Via the heat-conducting part 47, the connection between the heat sink 46 and the base board 431 can be enhanced, resulting in improved heat dissipation efficiency.

In an embodiment of this disclosure, referring to FIGS.12 and 16, in order to facilitate the dissipation of heat emitted by the heat sink 46 in the shell 12 to the external environment, a heat dissipation hole 121 is provided on the first side wall 122 of the shell 12. In this embodiment, the heat dissipation hole 121 passes through the first side wall 122 and is located on the opposite sides of the first side wall 122. They can be numerous and uniformly arranged on the first side wall 122. Through the heat dissipation hole 121, the interior of the shell 12 can be communicated with the external environment, so that the heat emitted by the heat sink 46 in the shell 12 can be dissipated to the external environment. Additionally, the heat dissipation hole 121 is located in front of the first side wall 122. When the intelligent mowing device moves forward, it can facilitate the airflow to enter the installation cavity of the shell 12 through the heat dissipation hole 121, which is conducive to the rapid dissipation of heat.

In an embodiment of this disclosure, referring to FIG.23, the environmental detection device 3 includes a fixed base 31 and a first lens 32 located on the top of the fixed base 31. The first lens 32 is used to collect panoramic images of the surrounding environment while the device body 1 is traveling. The first lens 32 can be a panoramic lens, which allows for the collection of panoramic information about the surrounding environment. Alternatively, the first lens 32 can be consist of multiple fisheye lenses 42. By using multiple fisheye lenses 42, images of the surrounding environment from different directions can be collected, and finally, all the environmental images collected by the fisheye lenses 42 can be synthesized to obtain panoramic information about the surrounding environment. Obviously, the fisheye lens 42 can also be other types of lenses with a wide angle, and this embodiment does not impose restrictions on this.

The first lens 32 can be used to collect panoramic images of the surrounding environment while the device body 1 is moving. The first lens 32 can send the collected panoramic images to the control unit in the device body 1 for processing these panoramic images. For example, the control unit can perform AI recognition based on the panoramic images, such as human shape recognition, thereby improving the security capability of the intelligent mowing device, enabling it to work independently outdoors, and enhancing the anti-theft capability of the intelligent mowing device. Obviously, for those skilled in the art, the control unit can also obtain other information based on the panoramic images, such as positioning signals, which are not specifically explained here.

The first lens 32 is securely attached to the fixed base 31. The fixed connection can be achieved by using bolts, or alternative methods such as clamping, adhesive bonding and other fixed connection techniques known to those skilled in the art. This embodiment is not limited to any specific connection method. The first lens 32 is pre-installed on the fixed base 31, which allows the fixed base 31 and the first lens 32 to be installed on the device body 1 as a module during installation, which is beneficial for the calibration and assembly of the first lens 32, thereby ensuring the installation precision of the first lens 32 on the device body 1. The installation precision requirements for the first lens 32 are typically high. If the first lens 32 is directly installed on the device body 1, specialized device is required to calibrate the first lens 32, which is challenging and demands high technical expertise. However, in the intelligent mowing device of this embodiment, the first lens 32 and fixed base 31 are installed on the device body 1 as a module, as long as the positioning between the fixed base 31 and the device body 1 is ensured, thereby the difficulty of installation is reduced.

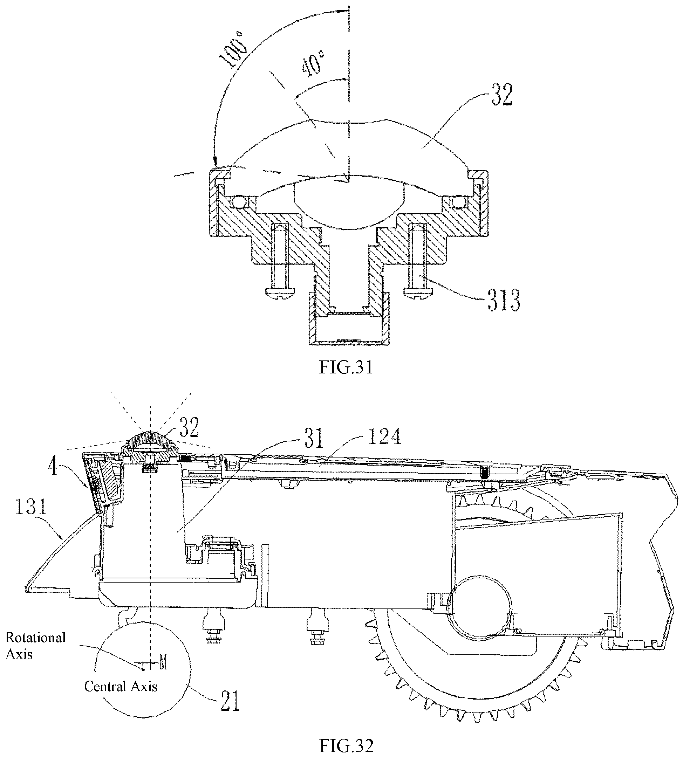

In an embodiment of this disclosure, referring to FIGS.23 and 32, the first lens 32 is vertically installed on the top of the fixed base 31, and the central axis of the first lens 32 is perpendicular to the end surface of the top of the fixed base 31. Through this arrangement, it can be ensured that the first lens 32 can be at the highest position of the fixed base 31, which is also beneficial for calibrating the first lens 32 on the fixed base 31.

In an embodiment of this disclosure, referring to FIG.23, the fixed base 31 is approximately L-shaped, including a vertical section 315 extending vertically relative to the base 11, and a horizontal section 316 located at the lower end of the vertical section 315 and extending horizontally relative to the base 11. The first lens 32 is installed on the vertical section 315 of the fixed base 31, which is convenient for the first lens 32 to extend out of the first shell 124 through the opening on the first shell 124 once installation is completed, to collect panoramic images. The fixed base 31 is installed on the base 11 through the horizontal section 316. The horizontal section 316 can have a larger contact area relative to the vertical section 315 and the base 11, this facilitates the placement of parts that are fixedly connected to the base 11 on the horizontal section 316, such as bolt holes and positioning structures that match the base 11, enabling the fixed base 31 to be more easily and stably connected to the base 11.

In an embodiment of this disclosure, referring to FIGS.23 and 24, on the top of the fixed base 31, namely on the top of the vertical section 315, there is also an installation base 311. The installation base 311 and the vertical section 315 can be integrally formed. During injection molding process, a structure of the installation base 311 is formed on the end surface of the top of the vertical section 315. This structure of the installation base 311 is designed to fit the end structure of the first lens 32, allowing the first lens 32 to be positioned and fixed within the installation base 311.

In an embodiment of this disclosure, referring to FIG.24, to achieve a seal between the first lens 32 and the fixed base 31, there is also a sealing pad 312 positioned between the end of the first lens 32 and the installation base 311. During the installation process, the sealing pad 312 is first placed on the end surface of the installation base 311, and then the first lens 32 is placed on the sealing pad 312 for subsequent installation steps. By setting the sealing pad 312, the connection between the first lens 32 and the installation base 311 can be tighter, and it can also serve to seal the installation base 311 and the first lens 32, preventing external dust, water vapor, and other impurities from entering the interior of the environmental detection device 3 through the gap between the first lens 32 and the installation base 311, causing damage to the internal circuit.

In a specific embodiment of this disclosure, the sealing pad 312 can be sealing glue. After the first lens 32 is adhered to the installation base 311 with the sealing glue, the two are then fixed together with screws 313, as shown in FIGS.23 and 31, thereby ensuring the stability and sealing of the connection between the first lens 32 and the installation base 311.

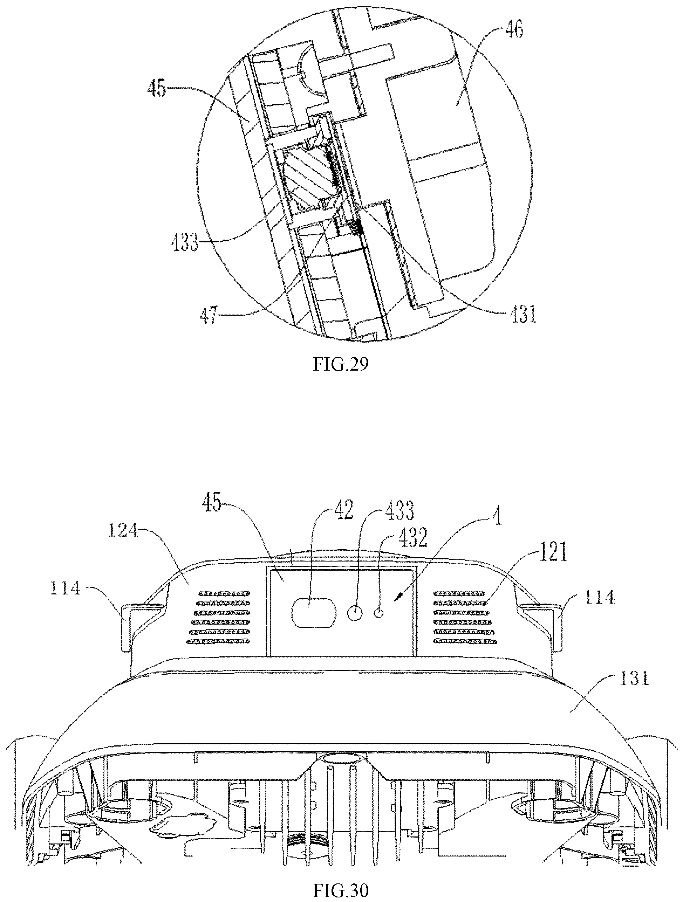

In an embodiment of this disclosure, to make the field-of-view angle of the first lens 32 and its position on the device body 1 meet the requirements for deviating from the edge on the front side of the device body 1, and to ensure that the first lens 32 can collect suitable panoramic images around the intelligent mowing device. Referring to FIGS.31 and 32, the dashed lines in these figures indicate the field-of-view angle of the first lens 32. The field-of-view angle of the first lens 32 within the range of 360° is between 40° to 100°. A larger field-of-view angle enables the first lens 32 to have a wider field of vision, which makes the collected panoramic images of the surrounding environment more comprehensive. The positioning of the first lens 32 enables the field-of-view angle to deviate from the edge of the device body 1, preventing the field-of-view angle of the first lens 32 from being blocked by the edge of the device body 1. In an embodiment of this disclosure, in the direction perpendicular to the forward direction of the device body 1, the first lens 32 is located at the central position of the device body 1. With reference to the viewing direction of FIG.30, the direction perpendicular to the forward movement of the device body 1 is defined as the left or right direction in FIG.21. The first lens 32 is set at the center position in the left and right directions of the device body 1. As a result, the panoramic image collected by the first lens 32 is centered on the opposite sides of the device body 1, which is beneficial for the subsequent control unit to locate and process the panoramic image.

In an embodiment of this disclosure, referring to FIGS.24 and 31, the fixed base 31 has an inner cavity 314, which can be used to place various components in the environmental detection device 3. A circuit board 35 that communicates with the first lens 32 can be arranged in the inner cavity 314. The circuit board 35 can be located at the end of the inner cavity 314 away from the first lens 32, or it can be located at the end of the inner cavity 314 close to the first lens 32. In order to facilitate communication between the first lens 32 and the circuit board 35 in the inner cavity 314, a through hole 3111 is provided on the installation base 311. After the first lens 32 is fixed on the installation base 311, the corresponding part of the end of the first lens 32 passes through the through hole 3111, which helps position the first lens 32 and enables the circuit board 35 to communicate with the first lens 32 through leads.

In an embodiment of this disclosure, referring to FIGS.22, 23 and 24, the horizontal section 316 of the fixed base 31 has an opening at its lower end, and a connecting base 33 for covering the opening is provided at the opening part of the horizontal section 316. The connecting base 33 is integrally formed as a flat plate, and its area is larger than that of the opening end of the horizontal section 316, which can completely cover the opening of the horizontal section 316. The horizontal section 316 and the connecting base 33 can be connected by bolts to fixedly connect the fixed base 31 on the positioning base 44. The connecting base 33 can also seal the inner cavity 314 of the fixed base 31 to prevent external impurities from entering the inner cavity 314. In an embodiment of this disclosure, the horizontal section 316 can be positioned and installed on the base 11 through the connecting base 33, which is not specifically explained here.

In an embodiment of this disclosure, referring to FIGS.22, 23 and 32, the fixed base 31 is designed to be installed from the bottom of the device body 1. When installing the fixed base 31, first pass the fixed base 31 from the bottom of the base 11 into the installation cavity, and enable the first lens 32 on the fixed base 31 to pass through the opening at the end surface of the top of the first shell 124, and then fix the fixed base 31 on the base 11. The fixed connection can be achieved by using bolts, or alternative methods such as clamping, adhesive bonding and other fixed connection techniques known to those skilled in the art. This embodiment is not limited to any specific connection method. By using the above installation method, if any parts of the fixed base 31 or the first lens 32 are damaged, the fixed base 31 can be directly removed from below the base 11 for part replacement or repair, thereby avoiding the need to disassemble the first shell 124.

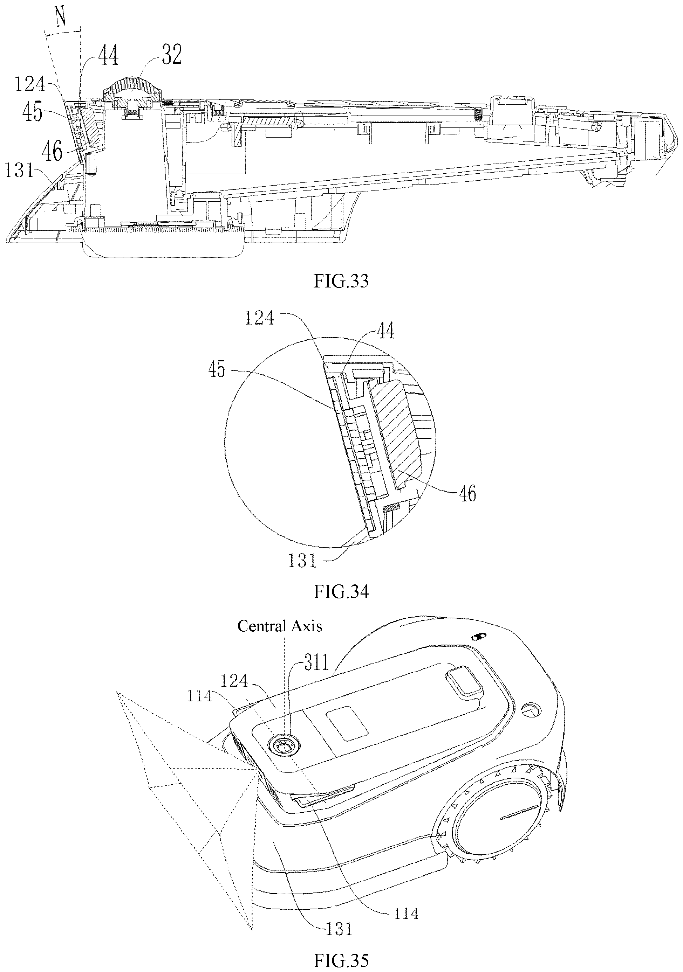

In an embodiment of this disclosure, referring to FIGS.30 and 33, to prevent the field-of-view angle of the environmental detection device 3 from being blocked by the second shell 131, the inclination direction of the second shell 131 is chosen to be opposite to that of the first shell 124. With reference to FIGS.33 and 34, the second shell 131 gradually inclines towards the front of the device body 1 from top to bottom. The first shell 124 is in the middle of the second shell 131 and protrudes from the end surface of the top of the second shell 131. This makes the upper end of the second shell 131 adjacent to the first shell 124, for example, it can be in contact with the side wall of the first shell 124. The lower end of the second shell 131 gradually extends downward and outward. With such a structural setting, it is beneficial for the field-of-view angle of the environmental detection device 3 to deviate from the edge on the front side of the second shell 131. As a result, the second shell 131 will not block the field-of-view angle of the environmental detection device 3, which is convenient for the environmental detection device 3 to collect more comprehensive environmental information in front of the device body 1.

In an embodiment of this disclosure, referring to FIGS.23, 30 and 35, the first lens 32 extends from the operation surface of the top of the first shell 124. On the device body 1, charging electrode pieces 114 are respectively set on both sides opposite to the first lens 32, and the intelligent mowing device can be charged through these charging electrode pieces 114. The two charging electrode pieces 114 are distributed in the direction perpendicular to the forward movement of the device body 1, and are respectively located on opposite two side walls of the first shell 124. Referring to the viewing direction of FIG.30, the charging electrode pieces 114 are respectively set on the side walls on the left and right sides of the first shell 124. When the battery of the intelligent mowing device runs low, the control unit can control the intelligent mowing device to return for charging. During charging, it is possible to dock with the charging device through the charging electrode pieces 114. In this embodiment, in the forward direction of the device body 1, the first lens 32 and the charging electrode pieces 114 are constructed so that the first lens 32 is positioned perpendicular to the central axis of the top of the fixed base, and is correspondingly arranged with the charging electrode pieces 114. That is, in the forward or backward direction of the device body 1, the central axis of the first lens 32 is located at a position corresponding to the charging electrode pieces 114, and it does not extend beyond the front and back ends of these charging electrode pieces 114, as shown in FIG.30. With such a structural setting, the overall structure of the intelligent mowing device can be compact, and more structures can be integrated into the limited space of the first shell 124.

In an embodiment of this disclosure, referring to FIGS.21 and 22, the second shell 131 surrounds the first shell 124, with the second shell 131 gradually inclining outwards the device body 1 from top to bottom. That is, the front side wall of the second shell 131 gradually inclines towards the front of the device body 1 from top to bottom. This setting can prevent the field-of-view angle of the first lens 32 from being blocked by the second shell 131, allowing the first lens 32 to collect more comprehensive panoramic information. Moreover, the inclined design of the second shell 131 also ensures that there is sufficient installation space below it to accommodate other components of the intelligent mowing device. For example, a crash plate component can be installed at the front end of the second shell 131. Upon colliding with an obstacle, it can ensure that only the crash plate component makes contact with the obstacle, thereby enabling the crash plate component to send out a control electrical signal.

The bottom of the second shell 131 extends inclinedly from the base 11 towards the interior of the device body 1 until it fits together with the surrounding side walls of the first shell 124. It can also be understood that the first shell 124 protrudes beyond the top of the second shell 131, thereby exposing the operation surface of the top of the first shell 124 and its surrounding side walls. The charging electrode pieces 114 are located on the both side walls of the first shell 124, so they can dock with the corresponding electrodes set up inside the base station to charge the intelligent mowing device.

In order to enable the first lens 32 to collect more complete and comprehensive images of the surrounding environment. Taking the forward direction of the device body 1 as the front, the first lens 32 extends to the end surface of the top of the front side of the device body 1, and the field-of-view angle of the first lens 32 facing the front of the device body 1 deviates from the edge on the front side of the device body 1. This ensures that the field-of-view angle of the first lens 32 facing the front of the device body 1 is not blocked by the edge of the device body 1. This can improve the image collection capability of the first lens 32 in the forward direction of the intelligent mowing device, avoiding safety accidents such as collisions with people during the movement of the intelligent mowing device.

The device body 1 has a specific size, and the first lens 32 is installed at the front of the device body 1. At a position to the rear of the device body 1, the field-of-view angle of the first lens 32 is partially blocked. This is because, as the device body 1 moves, the panoramic image in front of the moving device body 1 is more critical. Information such as obstacle details or human figures is essential to ensure the safety of the intelligent mowing device itself and personal safety during its forward movement. The importance of the image behind the device body 1 is relatively low. If the first lens 32 is installed at the rear of the device body 1, then its field-of-view oriented towards the front of the device body 1 will inevitably be blocked by the device body 1 itself, thereby affecting the collection of panoramic images in front of the device body 1, and thus not conducive to the processing of these panoramic images. Moreover, the first lens 32 is located on the top of the device body 1, which can also provide a better collection angle for the first lens 32, making the panoramic image of the surrounding environment collected by the first lens 32 more complete and comprehensive.

The first lens 32 includes a light-transmitting area 211. The first lens 32 collects environmental information through the light-transmitting area 211. Referring to the embodiment shown in FIG.1a, there is a first point ***a*** on the first lens 32, and a second point ***b*** of the top surface of the device body 1. The top surface of said device body 1 is located below the horizontal plane 100 passing through said first point ***a**.* The first point ***a*** corresponds to the contour point at the bottom edge of the light-transmitting area 211, which is oriented towards the front end of the device body 1. More specifically, the first point ***a*** corresponds to the contour point at the bottom edge of the light-transmitting area 211, which is oriented towards the very front end of the device body 1. That is to say, the first point ***a*** is the contour point at the bottom edge of the light-transmitting area 211 facing the forward direction. The second point ***b*** is the highest point of the top surface of the device body 1 located in front of said first lens 32. Furthermore, the second point ***b*** can be the highest point of the top surface of the front end of the device body 1. An angle between the line connecting the first point ***a*** and the second point ***b*** and the horizontal plane 100 is greater than or equal to a first set acute angle θ₁.

In a specific embodiment, the first set acute angle can be any value within the range of 5 to 15 degrees (including boundary values). For example, the first set acute angle can be 10 degrees. By setting the first set acute angle in this way, the first lens can remain unblocked within its collection area, thereby can collect image information from the ground, and the collected environmental information can meet the working requirements of the device body.

As shown in the embodiment of FIG.1a, the first lens 32 can be a panoramic camera. As shown in FIG.1b, the panoramic camera includes a light-transmitting area 211 and a module cover 222 located on the top of said light-transmitting area 211. The panoramic camera collects environmental information through said light-transmitting area 211. The module cover 222 can be a non-transparent area 212.

The panoramic camera does not need any movable parts, and can capture scenes across a horizontal 360-degree annular region around the panoramic camera, and has a large vertical field-of-view angle, which can capture scenes both above and below the lens plane. The panoramic image taken by the panoramic camera can be used for positioning and similar operations. The panoramic camera can be implemented in any form of device, and this embodiment is not limited to a particular type of device.

FIG.3 is a front view as seen from the front end of the mowing device. As can be seen from FIG.3, there is also a third point at the first lens 32, and there is also a fourth point of the top surface of the device body 1.

The third point corresponds to the contour point at the bottom edge of the light-transmitting area 211, which is oriented towards the left side of the device body 1. More specifically, the third point corresponds to the contour point at the bottom edge of the light-transmitting area 211, which is oriented towards the very left side of the device body 1. That is to say, the third point is the contour point at the bottom edge of the light-transmitting area 211 facing the very left direction. The fourth point is the highest point of the top surface of the device body 1 located on the left side of said first lens 32.

The third point corresponds to the contour point at the bottom edge of the light-transmitting area 211, which is oriented towards the right side of the device body 1. More specifically, the third point corresponds to the contour point at the bottom edge of the light-transmitting area 211, which is oriented towards the very right side of the device body 1. That is to say, the third point is the contour point at the bottom edge of the light-transmitting area 211 facing the very right direction. The fourth point is the highest point of the top surface of the device body 1 located on the right side of said first lens 32.

An angle between the line connecting said third point and said fourth point and the horizontal plane 100 is greater than or less than a second set acute angle.

Here, the second set acute angle ranges from 5 degrees to 15 degrees.

The above FIG.1a is the right view of FIG.3. As can be seen from the right view shown in FIG.1a, a solution provided by the embodiments of this disclosure meets the following conditions.

An angle between the line connecting the first point on the first lens 32 and the second point (which is the highest point of the top surface of the front end of the device body 1) and the horizontal plane 100 is greater than or equal to a first set acute angle.

The view shown in FIG.3 also meets the above conditions. FIG.3 shows two fourth points, which are the highest points of the device body 1 in two directions. Similarly, according to the orientation marked in FIG.3, the line connecting the third point ***a'*** at the first lens 32 facing the left side of the device body 1 and the highest point ***b'*** of the top surface of the part of the device body 1 located on the left side of the first lens 32 forms an angle θ₂ with the horizontal plane 100, this angle θ₂ is greater than or equal to a second set acute angle. The same applies to the right side, the line connecting the third point ***a"*** at the first lens 32 facing the right side of the device body 1 and the highest point ***b"*** of the top surface of the part of the panoramic camera located on the right side of the first lens 32 forms an angle θ₃ with the horizontal plane 100, this angle θ₃ is greater than or equal to the second set acute angle. Here, the second set acute angle can be any value between 5~15 degrees (including boundary values).

In a specific implementation, taking the first collection module as the center, all angles radiating along the radial directions of the circle can meet the above conditions. For example, for angles along the radial directions of the circle, the angles between the line connecting the first point and the second point and the horizontal plane 100 can be equal or not equal to each other. For instance, in FIGS.1a and 3, θ₁, θ₂, and θ₃ can be equal to each other.

As shown in FIGS.1a and 2, the device body 1 has a front end and a rear end. A first lens 32 is arranged on the top surface of the front end of the device body 1. As shown in FIG.3, the top surfaces of the device body 1 located on the left and right sides of the first lens 32 are inclined planes. And the top surface of the device body 1 located between these two inclined planes is a plane. The first lens 32 is located on the plane between these two inclined planes. That is to say, the first lens 32 is located higher up on the top surface of the device body 1 relative to these two inclined planes, in order to avoid blocking the first collection module from collecting environmental information on both sides.

As shown in FIG.3, the top surface of the device body 1 includes at least three inclined planes, which are the first inclined plane 111, the second inclined plane 112, and the third inclined plane 13. The inclined planes can be oblique planes, or they can be gradually downward arc surfaces, etc., which are not limited in embodiments of this disclosure. The third inclined plane 13 is located at the rear side of the first inclined plane 111 and the second inclined plane 112, that is, the first inclined plane 111 and the second inclined plane 112 are located on the left and right sides of the third inclined plane 13, respectively. The third inclined plane 13 is located at the rear side of the first lens 32, extends from the first lens 32 to the rear end of the device body 1, and inclines downward, which can also avoid blocking the first lens 32 from collecting environmental information at the rear side.

Continuing to refer to FIG.1a, the device body 1 has a front end and a rear end. More specifically, the first point ***a*** is the contour point at the front-end of the first lens 32; the second point b is the edge point at the front-end of the top surface of the device body 1. The distance A' between the first point ***a*** and the second point ***b*** is less than or equal to a first preset distance. Here, the first preset distance can be any value from 10 to 200 mm (including boundary values). For example, the first preset distance can be 100 mm. Alternatively, it can also be that the horizontal distance ***A*** from the second point ***b*** to the center point of the projection image of the first lens 32 on the horizontal plane 100 or to the center axis line of the first lens 32 is less than or equal to D, here, D = the first preset distance + the horizontal distance from the first point ***a*** to said center point or said center axis line. As shown in FIG.1a, both distances A' and A can be horizontal distances.

Furthermore, as shown in FIG. 1a, the distance B from the first point ***a*** to the top surface of the device body 1 is less than or equal to a second preset distance. Here, the second preset distance can be any value from 10 to 50 mm (including boundary values). For example, the second preset distance can be 30 mm. As mentioned above, the top surface at the rear side of the first lens 32 is the third inclined plane 13, and the top surface at the front side of the first lens 32 can be a plane or a downward inclined plane. The above distance B can be the vertical distance from the first point ***a*** to the top surface at the front side of the first lens 32.

In an embodiment of this disclosure, the first lens 32 extends to the end surface of the top of the device body 1, enabling the first lens 32 to be positioned at a high point of the intelligent mowing device, thereby increasing the collection range of the first lens 32. In an embodiment of this disclosure, an antenna 5 is also provided on the device body 1, which extends out of the end surface of the top of the device body 1, and the intelligent mowing device communicates with the outside and locates through antenna 5. Here, the first lens 32 is only lower than the height of the antenna 5 at the end surface of the top of the device body 1, which can ensure the installation height of the first lens 32 and avoid the first lens 32 being blocked by any structures other than the antenna 5. Moreover, since the antenna 5 is rod-shaped, even if the antenna 5 blocks the collection range of the first lens 32, this blockage is limited in the overall panoramic image and does not affect the processing of the panoramic image by the control unit.

As shown in FIG.2, the antenna 5 and the first lens 32 are located at both ends of the top of the device body 1. For example, the antenna 5 may include a mast and an antenna of an UWB module. The antenna of the UWB module is arranged on the mast.

It should be noted here that the above-mentioned antenna 5 is foldable. For example, in the working state, that is, the state where the antenna 5 is set vertically on the device body 1. In the non-working state, the antenna 5 is in the folded state. For example, in the folded state, the antenna 5 is set horizontally on the device body 1.

Here, ultra-wideband technology is a kind of wireless carrier communication technology, which is generally divided into UWB base stations (also known as UWB fixed stations) and UWB modules (also known as UWB mobile stations or UWB tags). UWB base stations and UWB modules form an UWB ranging and positioning system. In an embodiment of this disclosure, an UWB module can be set on the device body 1, and the antenna of the UWB module can be set on a mast. The mast should be set as vertically as possible on the top surface of the device body 1. The inclination angle of the mast should be controlled within 10 degrees or, alternatively, within 20 degrees. The UWB (Ultra Wide Band, ultra-wideband) ranging and positioning system has high ranging precision and can be used to achieve high-precision positioning (the positioning error can reach about 10 cm). The UWB ranging and positioning system is not affected by the texture characteristics of the surrounding scenery or the intensity of illumination, and the robustness of UWB positioning combined with visual positioning is higher. For example, multiple UWB base stations are set at the boundary intervals of the lawn to be worked on. When the UWB module performs spatial positioning, the antenna of the UWB module receives signals from multiple UWB base stations at the same time. The UWB module set on the mowing device can recognize the boundary based on the signals from the UWB base stations received by the antenna of the UWB module, and can also locate its own position in the working lawn. The antenna 5 in this embodiment applies UWB wireless communication technology to realize the positioning function of the intelligent mowing device 10, making the intelligent mowing device 10 more intelligent, which is conducive to improving the mowing efficiency of the intelligent mowing device 10 and improving the user experience of the intelligent mowing device 10.

It should be noted that, as shown in FIG.2, the UWB module can be integrated with the second collection module. The collection end of the second collection module faces the front side wall of said device body 1, correspondingly, the corresponding position of the front side wall is hollowed out or provided with a transparent cover.

The shell 12 of the intelligent mowing device is usually made of plastic material, and the plastic shell 12 can easily cause relatively serious interference to the antenna signal, affecting the ranging precision and ranging distance of the antenna. In view of this, an embodiment of this disclosure provides an intelligent mowing device that can solve the technical problem that the plastic shell of the intelligent mowing device in the prior art easily interferes with the antenna signal, which will be described in detail below.

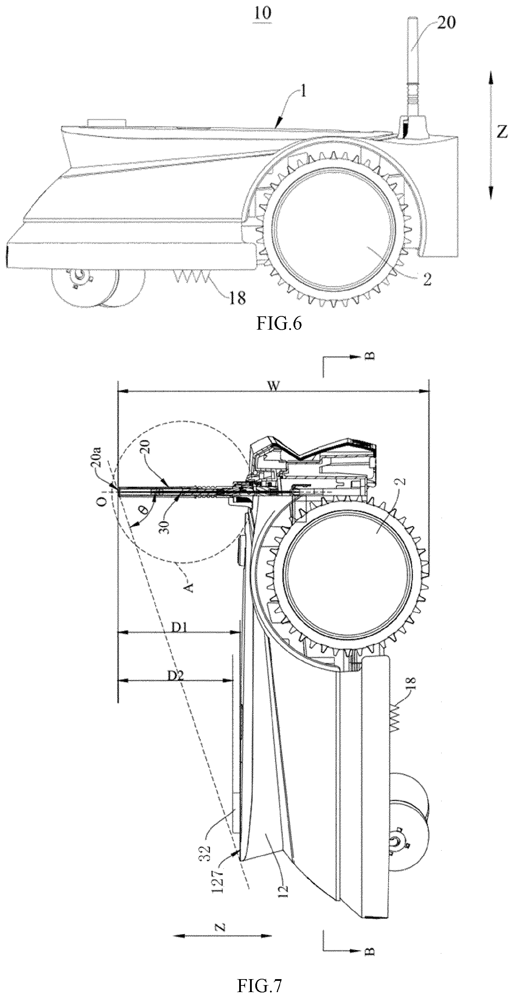

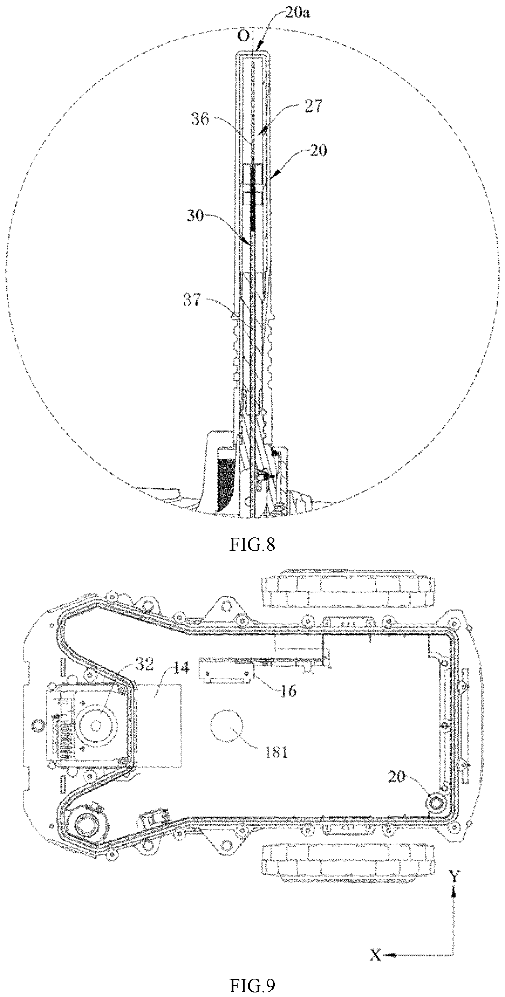

Referring to FIGS.6 to 8, FIG.6 is a structural schematic diagram of the intelligent mowing device according to one embodiment of the present disclosure. FIG.7 is a structural schematic diagram of the intelligent mowing device according to another embodiment of the present disclosure. FIG.8 is a structural schematic diagram of the region A of the intelligent mowing device shown in FIG.7. Here, FIG.7 shows a sectional structure of a local position in the intelligent mowing device 10 shown in FIG.6, where the antenna 5 and the device body 1 are arranged one after another in the vertical direction (as shown by the arrow Z in FIGS.6 and 7, the same below). When the intelligent mowing device 10 is in the working state, the height direction can be the vertical direction. The antenna 5 has an antenna cavity 27 inside. The antenna 5 also includes an antenna component 30, which is set in the antenna cavity 27 and is the main component for the antenna 5 to realize the positioning function.

Furthermore, as shown in FIG.8, the antenna component 30 can include an antenna module 36 and a feeder line 37 that are electrically coupled to each other. The antenna module 36 is the medium for the antenna component 30 to exchange signals with external communication devices. That is, the signal output by the antenna component 30 is transmitted to the external communication device via the antenna module 36, and the signal from the external communication device is received by the antenna module 36. The feeder line 37 is the medium for the antenna module 36 to connect with the device body 1 of the intelligent mowing device 10. The signal received by the antenna module 36 is transmitted to the device body 1 through the feeder line 37, and the signal output by the device body 1 is transmitted to the antenna module 36 through the feeder line 37. The antenna module 36 is set in the antenna cavity 27, and the feeder line 37 is electrically coupled to the antenna module 36. One end of the antenna cavity 27 is open, and the feeder line 37 extends from the antenna cavity 27 and connects to the device body 1.

Antenna 5 is not limited to implementing the positioning function of the intelligent mowing device 10. For example, antenna 5 can also be applied to interact with the status information of the intelligent mowing device 10 and user control commands, etc. Specifically, through antenna 5, the intelligent mowing device 10 interacts with the user's terminal device regarding the status information of the intelligent mowing device 10, including the remaining battery level, working mode, etc; or, the user's terminal device sends control commands to the intelligent mowing device 10 via antenna 5 to control the intelligent mowing device 10 to execute corresponding tasks. In an embodiment of this disclosure, the antenna 5 that implements the positioning function of the intelligent mowing device 10 is used as an example for illustration. It is only for the purpose of discussion and does not constitute a limitation.

The shell 12 has an upward-facing shell top surface 126. In the prior art, the shell of an intelligent mowing device is usually made of plastic material, and the intelligent mowing device 10 has many metal and plastic parts. If the antenna component 30 is placed inside the intelligent mowing device 10, the metal and plastic parts in the intelligent mowing device 10 will seriously interfere with the antenna signal, affecting the ranging precision and ranging distance of the antenna component 30.

In view of this, in this embodiment, the antenna 5 extends upward from the device body 1 and protrudes from the shell top surface 126. That is, the antenna component 30 adopts an external design, to reduce the interference of metal and plastic parts in the intelligent mowing device 10 on the antenna component 30, which is conducive to ensuring the ranging precision and ranging distance of the antenna component 30, and further ensuring the realization of the positioning function of the intelligent mowing device 10.

Moreover, the end of antenna 5 away from the device body 1 is the target end 20a. The line connecting the target end 20a and the highest point of the shell top surface 126 forms a target angle θ with the central axis of the antenna 5 (as shown by the dashed line O in FIGS.7 and 8, the same below), and the target angle θ ranges from 60° to 75°. The highest point of the shell top surface 126 refers to the position with the highest height between the shell top surface 126 and the ground plane. For example, the highest point of the shell top surface 126 is located at the front edge of the shell 12 in the travel direction of the device body 1. Obviously, the highest point of the shell top surface 126 is not limited to being located at the front edge of the shell 12 in the travel direction of the device body 1. It can also be at other positions, such as a position at a predetermined distance from the front edge of the shell top surface 126. This disclosure does not specify this.

The device body 1 defines a travel direction (as shown by the arrow X in FIG.9, the same below), which is perpendicular to the vertical direction, and the device body 1 moves along the travel direction. The front end of the device body 1 refers to the front end in the travel direction, and the rear end of the device body 1 refers to the rear end in the travel direction. In an embodiment, the highest point of the shell top surface 126 is located at the front end of the shell 12 in the travel direction of the device body 1. When the distance between the antenna 5 and the target position is fixed, a larger target angle θ indicates that the antenna 5 is at a lower height; in contrast, a smaller target angle θ indicates that the antenna 5 is at a higher height.

Hereby, in this embodiment, the target angle θ is set to 60° to 75° to optimally set the height of the antenna 5. Here, the target angle θ does not exceed 75°, ensuring that there is sufficient distance between the target end 20a of the antenna 5 and the shell 12 of the intelligent mowing device 10. This can reduce the interference of the shell 12 on the antenna signal, help ensure the ranging precision and ranging distance of the antenna 5, and further ensure the realization of the positioning function of the intelligent mowing device 10. Further, the target angle θ is not less than 60°, which can avoid the height of the antenna 5 being too high, reduce the risk of interference and collision between the antenna 5 and obstacles, thereby reducing the risk of damage to the antenna 5, and can improve the obstacle-avoidance capability of the intelligent mowing device 10. At the same time, it helps reduce the manufacturing cost of the intelligent mowing device 10.

In an embodiment of this disclosure, in the vertical direction, there is a first minimum distance D₁ between the target end 20a and the shell 12, with the first minimum distance D₁ being greater than or equal to 60 mm.

In this embodiment, by setting the height of the antenna 5, there is a sufficient distance between the target end 20a of the antenna 5 and the shell 12 of the intelligent mowing device 10, which helps further reduce the interference of the shell 12 on the antenna signal, and ensure the ranging precision and ranging distance of the antenna component 30. The antenna component 30 of this embodiment has a high ranging precision and a long ranging distance, which can ensure the realization of the positioning function of the intelligent mowing device 10.

Furthermore, considering that the intelligent mowing device 10 often operates in diverse terrains, it is inevitable that steep slopes will be encountered. When the intelligent mowing device 10 climbs a slope, its front end is raised, resulting in the antenna signal being shaded. This leads to a reduction in the ranging distance to 5-10 m in specific angular directions, which cannot meet the positioning requirements and impacts the realization of the positioning function of the antenna component 30.

In view of this, in this embodiment, the first minimum distance D₁ between the target end 20a and the shell 12 is set to be greater than or equal to 140 mm. That is, taking the climbing conditions of the intelligent mowing device 10 into account, the height of the antenna 5 is adaptively increased to ensure sufficient distance between the target end 20a of the antenna 5 and the shell 12 of the intelligent mowing device 10. This minimizes the interference of the shell 12 on the antenna signal as much as possible, thereby helping to ensure the ranging precision and ranging distance of the antenna component 30, and thus ensuring the realization of the positioning function of the intelligent mowing device 10. When the intelligent mowing device 10 is on flat terrain, the all-round ranging distance of the antenna component 30 can exceed 30 m. Even if the front end of the intelligent mowing device 10 is raised by 20°, the all-round ranging distance of the antenna component 30 can still exceed 20 m, which is sufficient to meet the positioning requirements of uneven and steep terrain.

It should be noted that when the terrain of the working environment of the intelligent mowing device 10 is relatively flat, in the embodiments of this disclosure, this allows the first minimum distance D₁ between the target end 20a of the antenna 5 and the shell 12 to be reduced to 60 mm. in this embodiment of the disclosure, considering the climbing condition of the intelligent mowing device 10, the height of the antenna 5 is adaptively adjusted, specifically setting the first minimum distance D₁ between the target end 20a and the shell 12 to be greater than or equal to 140 mm, to ensure the realization of the positioning function of the intelligent mowing device 10.

Furthermore, considering that if the height of the antenna 5 is too high, it will not only increase the manufacturing cost of the intelligent mowing device 10. Further, if the height of the antenna 5 is too high, it will lead to an increase in the height of the antenna 5, making it easy for the antenna 5 to interfere with and collide with obstacles during the movement of the intelligent mowing device 10, which can easily cause damage to the antenna 5 and is not conducive to improving the obstacle-avoidance capability of the intelligent mowing device 10.

Therefore, in this embodiment, the first minimum distance D₁ between the target end 20a and the shell 12 is set to be less than or equal to 190 mm. Thereby, in this embodiment, it is ensured that there is sufficient distance between the target end 20a of the antenna 5 and the shell 12 of the intelligent mowing device 10, which can reduce the interference of the shell 12 on the antenna signal, help ensure the ranging precision and ranging distance of the antenna 5, and further ensure the realization of the positioning function of the intelligent mowing device 10. Moreover, it can avoid the height of the antenna 5 being too high, reducing the risk of interference and collision between the antenna 5 and obstacles, and further reducing the risk of damage to the antenna 5, and improving the obstacle-crossing capability of the intelligent mowing device 10. At the same time, it helps reduce the manufacturing cost of the intelligent mowing device 10.

It should be noted that, in an embodiment of this disclosure, priority is given to considering the lower limit value of the first minimum distance D₁ between the target end 20a and the shell 12, to ensure the ranging precision and ranging distance of the antenna component 30. For relatively open working environments, the probability of interference and collision between the antenna 5 and obstacles is relatively low, so the upper limit value of the first minimum distance D₁ may not be required. Or when the setting height of the antenna 5 does not exceed the field-of-view angle of the first lens 32 (which will be described below) on the intelligent mowing device 10, the intelligent mowing device 10 can use its first lens 32 to assist in obstacle-avoidance, thus avoiding interference and collision between the antenna 5 and obstacles. So in this case, the upper limit value of the first minimum distance D₁ may also not be required.

In one embodiment, considering that not only the shell 12 of the intelligent mowing device 10 but also the metal parts on the device body 1 will interfere with the antenna signal, the antenna component 30 of this embodiment also needs to maintain a sufficient distance from the metal parts on the device body 1. Specifically, the device body 1 also has a first lens 32, which is used to capture environmental images to assist the intelligent mowing device 10 in path planning and obstacle-avoidance. Here, the first lens 32 is set to protrude from the shell 12 towards the side where the target end 20a is located, and the part of the first lens 32 that protrudes from the shell 12 has the potential to interfere with the antenna signal.

In this embodiment, in the height direction, there is a second minimum distance D₂ between the target end 20a and the first lens 32, and the second minimum distance D₂ is greater than or equal to 130 mm. In this embodiment, by setting the height of the antenna 5, it is ensured that there is sufficient distance between the target end 20a of the antenna 5 and the first lens 32. This can not only further reduce the interference of the first lens 32 on the antenna signal but also further ensure the ranging precision and ranging distance of the antenna component 30. Moreover, the climbing condition of the intelligent mowing device 10 is taken into account, and the height of the antenna 5 is adaptively increased. So even if the front end of the intelligent mowing device 10 is raised to a certain angle, the antenna component 30 can still have sufficient ranging precision and ranging distance, which can fully meet the positioning requirements.

Furthermore, in this embodiment, the second minimum distance D₂ between the target end 20a and the first lens 32 is set to be less than or equal to 180 mm. Thereby, in this embodiment, it is ensured that there is sufficient distance between the target end 20a of the antenna 5 and the first lens 12, which can reduce the interference of the first lens 12 on the antenna signal, help ensure the ranging precision and ranging distance of the antenna 5, and further ensure the realization of the positioning function of the intelligent mowing device 10. Moreover, it can avoid the height of the antenna 5 being too high, reducing the risk of interference and collision between the antenna 5 and obstacles, and further reducing the risk of damage to the antenna 5, and improving the obstacle-avoidance capability of the intelligent mowing device 10. At the same time, it helps reduce the manufacturing cost of the intelligent mowing device 10.

In one embodiment, in the height direction, there is a maximum distance W between the target end 20a and the device body 1. Specifically, the maximum distance W is the distance between the target end 20a of the antenna 5 and the lowest part of the wheels on the device body 1. The maximum distance W is the ground clearance of the target end 20a when the intelligent mowing device 10 is working normally.

In this embodiment, the maximum distance W is greater than or equal to 400 mm. In this embodiment, by setting the height of the antenna 5, it is ensured that the degree of interference of the antenna signal can be further reduced, and the ranging precision and ranging distance of the antenna component 30 can be ensured. Moreover, the climbing condition of the intelligent mowing device 10 is taken into account, and the height of the antenna 5 is adaptively increased. So even if the front end of the intelligent mowing device 10 is raised to a certain angle, the antenna component 30 can still have sufficient ranging precision and ranging distance, which can fully meet the positioning requirements.

Furthermore, in this embodiment, the maximum distance W is set to be less than or equal to 450 mm. Thereby, in this embodiment, sufficient height of the antenna 5 is ensured. This can reduce the degree of interference on the antenna signal of the antenna 5, ensure the ranging precision and ranging distance of the antenna 5, and further ensure the realization of the positioning function of the intelligent mowing device 10. Moreover, it can avoid the height of the antenna 5 being too high, thereby reducing the risk of interference and collision between the antenna 5 and obstacles, and further reducing the risk of damage to the antenna 5, and improving the obstacle-avoidance capability of the intelligent mowing device 10. At the same time, it helps reduce the manufacturing cost of the intelligent mowing device 10.

Since the heat sink 46 is made of metal material to ensure that the heat sink 46 has good thermal conductivity, the antenna 5 in this embodiment needs to be kept away from the heat sink 46 to minimize its interference on the antenna signal.

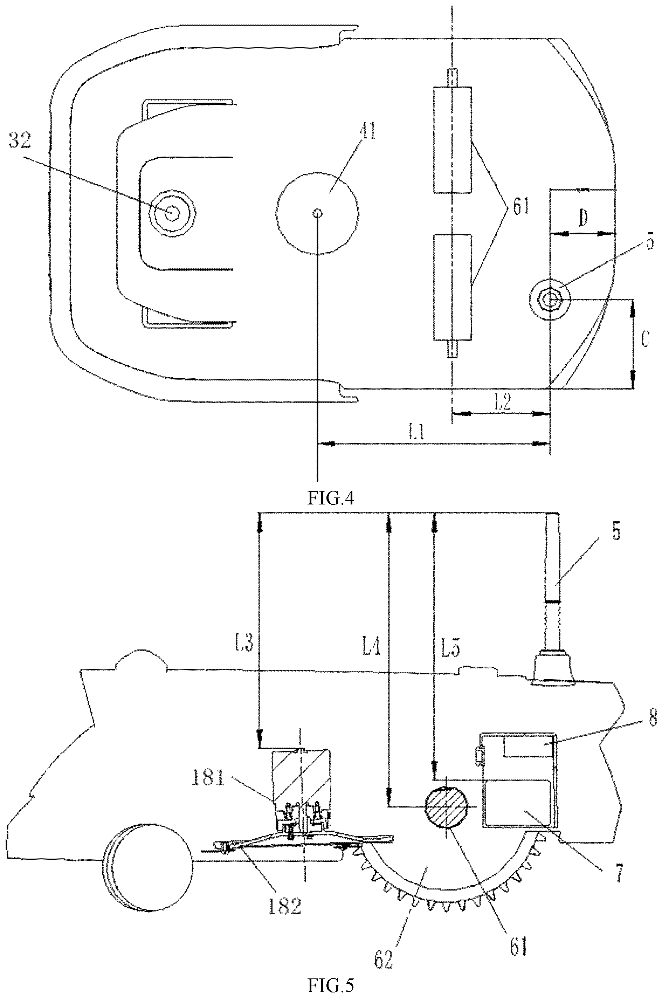

As shown in FIG.4, the device body 1 is equipped with an actuator 18 for performing the mowing task. The horizontal distance L₁ between the antenna 5 and the actuator 18 is greater than or equal to a third preset distance. Here, the third preset distance can be any value between 100 ~ 200 mm (including boundary values). For example, the third preset distance can be 150 mm. In the working state, the vertical distance L₃ from the top of the antenna 5 to the actuator 18 is greater than or equal to a fourth preset distance. Here, the fourth preset distance can be any value between 100 ~ 200 mm (including boundary values). For example, the fourth preset distance can be 150 mm. Thus, without increasing the length of the mowing device itself, the interference from the actuator 18 to the antenna 5 is minimized.

Specifically, the actuator 18 can comprise a mowing motor 181 and a mowing blade disc 182, wherein the mowing motor 181 outputs power to drive the mowing blade disc 182 to operate. The mowing motor 181 is located above the mowing blade disc 182. Considering that the mowing motor 181 has many metal parts, the antenna 5 of this embodiment needs to be kept at a distance from the mowing motor 181 to minimize the interference from the mowing motor 181 to the antenna signal. The aforementioned horizontal distance L₁ can be the distance from the center of the projection of the antenna 5 on the horizontal plane 100 to the center of the projection of the mowing motor 181 on the horizontal plane 100 when the antenna 5 is in the working state. The aforementioned vertical distance L₃ can be the distance from the top of the antenna 5 to the top of the mowing motor 181. More precisely, it refers to the distance from the top of the antenna 5 to the intersection point between the output shaft of the mowing motor 181 and the top of the mowing motor 181.

By limiting the vertical distance L₃ from the top of the antenna 5 to the actuator 18 to be greater than or equal to the fourth preset distance, and limiting the horizontal distance L₁ from the antenna 5 to the actuator 18 to be greater than or equal to the third preset distance, the interference from the mowing motor 181 to the signal of the antenna 5 can be effectively reduced. This, in turn, enhances the accuracy of the signal transmission and reception of the antenna 5.

In an embodiment of this disclosure, the first lens 32 and the heat sink component 14 are arranged on one side of the mowing motor 18 in the travel direction, while the antenna 5 is arranged on the other side of the mowing motor 181 in the travel direction. Specifically, the first lens 32 and the heat sink component 14 are arranged at the front end of the device body 1, and the antenna 5 is arranged at the rear end of the device body 1. Moreover, the antenna 5 and the mowing motor 181 are spaced apart from each other, so that the antenna 5 is kept away from the mowing motor 181.

In this embodiment, by arranging the first lens 32, the heat sink component 14, the mowing motor 181, and the antenna 5, the antenna 5 is kept away from the first lens 32, the heat sink component 14, and the mowing motor 181. That is, there is sufficient distance between the antenna 5 and the first lens 32, the heat sink component 14, and the mowing motor 181, and thereby, the interference from the first lens 32, the heat sink component 14, and the mowing motor 181 to the antenna signal is minimized. This not only ensures the ranging precision and ranging distance of the antenna 5, but also facilitates the realization of the positioning function of the intelligent mowing device 10.

In an embodiment of this disclosure, a mainboard 16 is arranged on one side of the mowing motor 181 in the left or right direction, while an antenna 5 is arranged on the other side of the mowing motor 181 in the right or left direction. Specifically, along the travel direction of the intelligent mowing device 10, the mainboard 16 is arranged at the right end of the device body 1, and the antenna 5 is arranged at the left end of the device body 1. Moreover, the antenna 5 and the mowing motor 181 are spaced apart from each other, so that the antenna 5 is kept away from the mowing motor 181.

In this embodiment, by arranging the mainboard 16, the mowing motor 181, and the antenna 5, the antenna 5 is kept away from the mainboard 16 and the mowing motor 181. That is, there is sufficient distance between the antenna 5 and the mainboard 16 as well as the mowing motor 181, and thereby, the interference from the mainboard 16 and the mowing motor 181 to the antenna signal is minimized. This not only ensures the ranging precision and ranging distance of the antenna 5, but also facilitates the realization of the positioning function of the intelligent mowing device 10.

It should be noted that in this embodiment, the first lens 32 and the heat sink component 14 are arranged at the front end of the device body 1, the antenna 5 is arranged at the rear end of the device body 1, the motherboard 16 is arranged at the right end of the device body 1, and the antenna 5 is located at the left end of the device body 1. In other words, in the overall arrangement of the intelligent mowing device 10, the antenna 5 is positioned at the left rear of the device body 1. The antenna 5 is kept away from metal components such as the first lens 32, the heat sink component 14, the motherboard 16, and the mowing motor 181, so that there is sufficient distance between the antenna 5 and these metal components, to minimize the interference from these metal components to the antenna signal. This ensures the ranging precision and ranging distance of the antenna 5, and facilitates the realization of the positioning function of the intelligent mowing device 10.

As shown in FIGS.4 and 5, the device body 1 of the mowing device also includes a drive device 2. In the working state, the horizontal distance L₂ from the antenna 5 to the drive device 2 is greater than or equal to a fifth preset distance. Here, the fifth preset distance can be any value between 50 ~ 70 mm (including boundary values). For example, the fifth preset distance can be 60 mm. In the working state, the vertical distance L₄ from the top of the antenna 5 to the travel mechanism is greater than or equal to a sixth preset distance. Here, the sixth preset distance can be any value between 150 ~ 250 mm (including boundary values).

Specifically, the drive device 2 can include: a drive motor 61, front wheels 21, and rear wheels 22. The drive motor 61 outputs driving power to drive the movement of the rear wheel 22. As shown in the embodiment of FIG.5, the drive device 2 of the device body 1 can also include front wheels 21, which have no power source and can be arranged at the front end of bottom of the device body 1; the rear wheels 22 can be arranged at the rear end of the bottom of the device body 1. The device body 1 can be equipped with two rear wheels 22, each of which is correspondingly connected to a power source (i.e., the drive motor 61). As shown in FIG.4, the two drive motors 61 are arranged along the axle of the traveling wheel and are positioned between the two rear wheels 22.

As a feasible embodiment, referring to FIGS.21 and 22, the drive device 2 of this embodiment includes front wheels 21 and rears wheel 22 arranged on the base 11. Two front wheels 21 are arranged on the opposite sides at the front end of the base 11. Additionally, two rear wheels 22 are arranged on the opposite sides at the rear end the base 11. The rear wheels 22 can be driving wheel, which can drive the intelligent mowing device to travel on the working surface through the rear wheel 22. Obviously, for those skilled in the art, the front wheels 21 can also be driving wheel, which can drive the intelligent mowing device to travel on the working surface through the front wheel 21, and this embodiment does not specifically limit this. Moreover, the number of front wheels 21 and rear wheels 22 can be selected as required, and this embodiment imposes no restrictionon this.

The aforementioned horizontal distance L₂ is the distance from the center of the projection of the antenna 5 on the horizontal plane 100 to the power output shaft axis of the drive motor 61 when the antenna 5 is in the working state. The aforementioned vertical distance L₄ can be the vertical distance from the top of the antenna 5 to the power output shaft of the drive motor 61.

Similarly, by limiting the horizontal distance L₂ from the antenna 5 to the drive device 2 to be greater than or equal to the fifth preset distance, and limiting the vertical distance L₄ from the top of the antenna 5 to the travel mechanism to be greater than or equal to the sixth preset distance, the interference from the drive motor 61 to the signal of the antenna 5 can be effectively reduced. This, in turn, enhances the accuracy of the signal transmission and reception of the antenna 5.

In an embodiment of this disclosure, the first lens 32 is arranged at a position above the front wheels 21. Referring to FIG.32, the first lens 32 is perpendicular to the central axis of the top of the fixed base 31, with the distance M between it and the rotation axis of the front wheels 21 being less than 10 cm. Such an arrangement ensures the first lens 32 is as close to the front as possible. Thereby, it avoids the field-of-view angle of the first lens 32 being blocked by the edge of the device body 1, and makes the overall structure of the intelligent mowing device more compact. Moreover, by setting the first lens 32 at a position close to the front wheels 21, the first lens 32 can follow the movement of the front wheels 21 as much as possible. Thus, it can collect important panoramic images in complex working environments.

Furthermore, as shown in FIGS.2 and 5, the device body 1 also includes a battery 7. Along the travel direction of the device body 1, the battery 7 is arranged between the drive device 2 of the device body 1 and the antenna 5. In the working state, the vertical distance L₅ from the top of the antenna 5 to the battery 7 is greater than or equal to a seventh preset distance. Here, the seventh preset distance can be any value between 150 ~ 250 mm (including boundary values). Specifically, as shown in FIG.5, the vertical distance L₅ can be the vertical distance from the top of the antenna 5 (when in the working state) to the top surface of the battery 7. The battery 7 can be a battery pack with energy storage (i.e., charging) function. Moreover, the device body 1 is equipped with a charging port and a charging circuit. The mowing device can be moved to the base station, dock with the charging port of the base station, and then charge the battery 7.

The discharge of the battery will interfere with the antenna 5. Therefore, in this embodiment, the vertical distance L₅ from the top of the antenna 5 to the battery 7 is limited. This limit is set to be greater than or equal to the seventh preset distance, which can reduce the electromagnetic interference of the battery on the antenna 5 while keeping the structure of the device body 1 as compact as possible.

Furthermore, the mowing device provided by this embodiment of the disclosure can optionally be equipped with communication module, such as 3G, 4G, or 5G communication module, WIFI module, Bluetooth module, etc., with no restrictions in this embodiment. For example, as shown in FIG.2, the device body 1 is provided with an installation slot, and the communication module 8 can be detachably installed in the installation slot. The communication module 8 is positioned above the battery 7, and there is a gap L₉ between the communication module 8 and the battery 7. Here, the gap L₉ is greater than or equal to a set gap value. The set gap value can be any value between 5 ~ 30 mm (including boundary values). For example, the set gap value can be 15 mm.

The reason for leaving the gap above between the communication module 8 and the battery 7 is that the battery generates heat during charging and discharging, and this gap is beneficial for ventilation and cooling, thus reducing the negative impacts of high temperature on the communication module.

As shown in FIG.2, the vertical distance L₇ from the communication module 8 to the drive device 2 of the device body 1 is greater than or equal to an eighth preset distance. Here, the eighth preset distance can be any value between 20 ~ 60 mm (including boundary values). For example, the eighth preset distance can be 40 mm. Specifically, the aforementioned vertical distance L₇ can be the vertical distance from the bottom surface of the communication module 8 to the output shaft axis of the drive motor 61 in the drive device 2.

As shown in FIG.2, the horizontal distance L₈ between the communication module 8 and the drive device 2 of the device body 1 is greater than or equal to the ninth preset distance. Here, the ninth preset distance can be any value between 20 ~ 60 mm (including boundary values). For example, the ninth preset distance can be 40 mm. Specifically, referring to FIG.2, the aforementioned horizontal distance L₈ is the horizontal distance from the side of the communication module 8 close to the drive device 2 (i.e., the left side of the communication module 8 in FIG.2) to the output shaft axis of the drive motor 61 in the drive device 2.

As shown in FIG.2, the horizontal distance L₆ between the communication module 8 and the mowing motor 181 of the actuator 18 is greater than or equal to a tenth preset distance. Here, the tenth preset distance can be any value between 100 ~ 200 mm (including boundary values). For example, the tenth preset distance can be 150 mm.

In this embodiment, without increasing the volume of the entire intelligent mowing device, that is, on the premise of ensuring the compact structure of the device body 1, the communication module 8 is arranged above the battery 7, so that the communication module 8 is kept away from the drive motor 61 and the mowing motor 181. Moreover, the vertical distance L₇ from the communication module 8 to the drive motor 61 of the drive device 2 of the device body 1 is limited to be greater than or equal to the eighth preset distance; the horizontal distance L₈ from the communication module 8 to the drive motor 61 of the drive device 2 of the device body 1 is limited to be greater than or equal to the ninth preset distance; and, the horizontal distance L₆ from the communication module 8 to the mowing motor 181 is limited to be greater than or equal to the tenth preset distance. This can effectively reduce the interference among the battery, mowing motor 181, drive motor 61, antenna 5 and the communication module.

In an embodiment of this disclosure, the first collection module is arranged according to the method described in FIG.1a. That is, the line connecting the first point on the first collection module and the second point on the device body 1 forms an angle with the horizontal plane 100 that is greater than or equal to the first set acute angle. This is to avoid the situation where the first collection module is blocked, causing the loss of environmental information collected. Additionally, the environmental information collected by the first collection module can meet the working requirements of the device body 1. Moreover, by limiting the angle between the line connecting the first point on the first collection module and the second point on the device body 1 and the horizontal plane 100 to be greater than or equal to the first set acute angle, it indicates that the first collection module is not set on the top edge of the device body 1. That is, there is a certain distance between the first collection module and the top edge of the device body 1, thereby reducing the probability of the first collection module being damaged by impacts.

Furthermore, in this embodiment of the disclosure, the second collection module is set on the inclined front end side wall, so that the second collection module can collect information about the ground in front of the device body 1 while reducing the adhesion of dust and rainwater, improving the accuracy of information collection by the second collection module. Additionally, in this scheme, the inclination angle of the front end side wall is limited. That is, the angle between the front end side wall and the vertical plane is less than or equal to the second set acute angle, which ranges from 1 to 40 degrees (e.g., 30 degrees). This limitation serves to reduce the adhesion of dust and rainwater. However, it may also restrict the collection area of the second collection module to a better collection area. If the angle between the front end side wall and the vertical plane is excessively large, the collection area of the second collection module will be too close to the front end of the device body 1. When an obstacle is detected, the speed of the device body 1 may be so fast that it cannot brake or avoid obstacles in time, and thus a collision occurs. It can be seen that, in this embodiment of the disclosure, by limiting the angle between the front end side wall and the vertical plane to be less than or equal to the second set acute angle (e.g., 20 degrees, 30 degrees, etc.), the collection area of the second collection module is limited to a better collection area, which can detect the area at a certain distance in front of the device body 1, and provide a braking distance, obstacle-avoidance planning time, etc. for the device body 1.

Furthermore, in this embodiment of the disclosure, the positional relationship between the antenna 5 and the mowing mechanism, travel mechanism, battery, communication module, etc., is also defined, so that the antenna 5 is free from the influence of the above various interference sources.

Furthermore, as shown in FIG.4, there may be trees, hedges, fences, walls, etc., at the boundary of the working environment of the mowing device. In order to protect the antenna 5 from the influence of boundary objects such as trees, hedges, fences, cavities, etc. The antenna 5 is set at the rear end of the device body 1 and biased to one side. In specific implementation, whether the antenna 5 is biased to the left or right side of the rear end of the device body 1 needs to be determined by the operating posture of the mowing device at the boundary. For example, if the mowing device runs along the boundary on the right side, then the antenna 5 is arranged at the left rear end of the top of the device body 1. If the mowing device runs along the boundary on the left side, then the antenna 5 is arranged at the right rear end of the top of the device body 1.

Referring to the embodiment shown in FIG.4, the antenna 5 is arranged at the left rear end of the top of the device body 1. More specifically, in the working state, the distance C between the antenna 5 and the left edge of the device body 1 can be a value between 50 ~ 150 mm (including boundary values). For example, the distance C can be 100 mm, 102 mm, or 110 mm, etc. In the working state, the distance D between the antenna 5 and the rear end edge of the device body 1 can be a value between 50 ~ 100 mm (including boundary values). For example, the distance D can be 75 mm, 80 mm, etc.

In this embodiment, the environmental detection device 3 and the UWB module can work together to achieve autonomous positioning, obstacle recognition, path planning, boundary recognition, and so on, for the mowing device. In addition to the environmental detection device 3 and the UWB module, the device body 1 of the mowing device can also be equipped with sensors such as IMU (Inertial Measurement Unit, inertial measurement unit), wheel speed monitoring unit, etc., which can also contribute to improving the intelligence level of the mowing device.

Moreover, it should be mentioned that, in the embodiment of this application, the mowing device uses UWB technology, so there is no need to set up boundary lines with identification functions at the boundary of the working scene of the mowing device. The mowing device provided by this embodiment is a boundary-less mowing device. The first lens 32, environmental detection device 3, UWB module, etc., work together to achieve the operation of the mowing device within a predetermined boundary without the need for installation of boundary lines.

The aforementioned embodiment is proposed from the perspective of the first collection module. The mowing device is also equipped with an antenna 5. The antenna 5 is also a type of collection module, which is used to receive signals sent by signal sources in the workplace, and/or send signals to communication objects in the workplace, etc., in order to determine the working boundary and locate the position in the workplace by receiving and sending signals. Therefore, the signal stability of the antenna 5 and the avoidance of interference are key factors. This application provides the following embodiments, which are proposed from the perspective of reducing interference with respect to the antenna 5. As shown in FIG.2, 4, and 5, the structural diagrams of the mowing device are provided according to another embodiment of the disclosure.

The mowing device includes a device body 1, wherein the device body 1 is equipped with an actuator 18, a drive device 2, and a battery 7. The antenna 5 is arranged on the top of the device body 1. According to the travel direction of the device body 1, the front and rear ends of the device body 1 can be determined. That is, when the device body 1 moves forward, the forward-facing end is the front end of the device body 1, while the opposite end corresponds to the rear end of the device body 1. From the front end to the rear end of the device body 1, the actuator 18, the drive device 2, the battery 7, and the antenna 5 are arranged in sequence.

In order to reduce the signal interference of the actuator 18 on the antenna 5, as shown in FIG.4, in the working state, the horizontal distance L₁ between the antenna 5 and the mowing motor 181 of the actuator 18 is greater than or equal to a third preset distance, which ranges from 100 to 200 mm. In the working state, the vertical distance L₃ from the top of the antenna 5 to the mowing motor 181 of the actuator 18 is greater than or equal to the fourth preset distance, which ranges from 100 to 200 mm.

In specific implementation, the antenna 5 includes a mast and an antenna of the UWB module. The antenna of the UWB module is set on the mast. In practical applications, the antenna of the UWB module can be arranged at the top of the mast.

As shown in FIGS.4 and 5, in the working state, the horizontal distance L₂ from the antenna 5 to the drive motor 61 of the drive device 2 is greater than or equal to the fifth preset distance, which ranges from 50 to 70 mm; in the working state, the vertical distance L₄ from the top of the antenna 5 to the drive motor 61 of the drive device 2 is greater than or equal to the sixth preset distance, which ranges from 150 to 250 mm.

In the working state, the vertical distance L₅ from the top of the antenna 5 to the battery 7 is greater than or equal to the seventh preset distance. Here, the seventh preset distance ranges from 150 to 250 mm.

Furthermore, the mowing device can optionally be equipped with communication module 8, such as 3G communication module, 4G communication module, 5G communication module, WIFI module, Bluetooth module, etc., with no restrictions in this embodiment. As shown in FIGS.2 and 5, the device body 1 is provided with an installation slot. The communication module 8 can be detachably installed in the installation slot.

The communication module 8 is positioned above the battery 7, and there is a gap between the communication module 8 and the battery 7. Here, the gap is greater than or equal to a set gap value, which ranges from 5 to 30 mm.

As shown in FIG.5, the vertical distance L₄ from the communication module 8 to the drive motor 61 of the drive device 2 of the device body 1 is greater than or equal to an eighth preset distance. Here, the eighth preset distance ranges from 20 to 60 mm.

As shown in FIG.2, the horizontal distance L₈ between the communication module 8 and the drive motor 61 of the drive device 2 of the device body 1 is greater than or equal to the ninth preset distance. Here, the ninth preset distance ranges from 20 to 60 mm.

As shown in FIG.2, the horizontal distance L₆ between the communication module 8 and the mowing motor 181 of the actuator 18 is greater than or equal to a tenth preset distance. Here, the tenth preset distance ranges from 100 to 200 mm.

Furthermore, as shown in FIG.4, the antenna 5 is arranged at the left rear part of the top of the device body 1.

It should be noted here that: regarding the relative positional relationship between the antenna 5, mowing mechanism, travel mechanism, battery, communication module, and the specific implementation structure, refer to the corresponding description above, which is not repeated here.

Among them, the incorporation of a communication module into the mowing device in this disclosure enables the mowing device to communicate and connect with external devices, such as base stations, user terminals (e.g., computers, mobile phones, smart wearable devices, etc.), cloud, servers, and so on. External devices that communicate with the mowing device can obtain working parameters of the mowing device (such as battery level, working mode, etc.), and can also send commands to the mowing device to control it to perform corresponding tasks, etc.

In addition, the schemes recorded in the aforementioned embodiment can also be extended to robots other than the mowing device. That is, this disclosure also provides a corresponding embodiment of a robot. The robot may include a device body 1, which is equipped with an actuator 18. A first collection module is arranged on the top of the device body 1 for collecting environmental information. There is a first point on the first collection module, and a second point of the top surface of the device body 1. The top surface of the device body 1 is located below the horizontal plane 100 passing through the first point. The line connecting the first point and the second point forms an angle greater than or equal to the first set acute angle with the horizontal plane 100.

This disclosure also provides a robot, which includes a device body 1. The device body 1 is equipped with an actuator 18, a travel mechanism, and a battery. The antenna 5 is arranged at the top of the device body 1. Here, the actuator 18, the travel mechanism, the battery, and the antenna 5 are arranged in sequence from the front end to the rear end of said device body 1.

What needs to be noted here is that the content related to the first collection module, antenna 5, travel mechanism, battery, etc., in the aforementioned robot embodiment can be referred to in the previous content, and is not repeated here. Additionally, in the robot embodiment, a second collection module, communication module, etc., can also be included. Similarly, the content related to the second collection module, communication module, as well as the relative positional relationship between each module and mechanism on the device body 1, can be referred to in the previous content.

For different types of robots, the aforementioned actuator 18 will have different specific implementations. For example, if the aforementioned robot is a cleaning robot, the actuator 18 can include, but is not limited to: roller brushes, cloths, etc. If the aforementioned robot is a mowing robot, the actuator can be a mowing mechanism. If the above robot is an industrial robot or service robot, the actuator 18 can be a mechanical arm, and so on.

Below, the technical solutions provided by the embodiments of this disclosure are explained in conjunction with specific application scenarios.

The mowing robot includes a first collection module, a second collection module, an UWB module, a communication module, a mowing mechanism, and a travel mechanism. The antenna of the UWB module is arranged on the mast at the left rear end of the device body 1 of the mowing robot. The first collection module includes a panoramic camera. The second collection module includes a fisheye camera, TOF module (emitting terminal and receiving terminal).

The UWB module on the mowing robot communicates with the UWB base station at the boundary of the working area for positioning and recognizing boundaries. The mast of the UWB module antenna is arranged at the position shown in FIG.4, which can avoid the mast being affected by interferers (such as trees, hedges, or fences, etc.).

The panoramic camera is used to collect images around the robot, and the images collected by the panoramic camera can be used for positioning and other functions of the mowing robot. The panoramic camera is arranged at the position shown in FIG.1a, which will not be blocked and can also avoid collisions.

The second collection module is used to collect images of the ground in front of the robot. The images collected by the second collection module can be used for obstacle recognition and other functions. The second collection module is arranged at the position shown in FIG.2, which can reduce the adhesion of dust, rainwater, etc., and can also collect a more suitable ground area, providing enough time for the robot to avoid obstacles and brake, ensuring the driving safety of the robot.

The relative positional relationship between the antenna of the UWB module, the communication module, the mowing mechanism, and the travel mechanism is shown in FIGS.4 and 5, which can reduce the interference between various electrical components while ensuring that the overall structure of the robot is compact.

Referring to FIG.9, it is a sectional structural schematic diagram of the intelligent mowing device shown in FIG.7 along the B-B direction.

In one embodiment, it is also defined the left and right directions (as shown by the arrow Y in FIG.9, the same below) for the device body 1, wherein the height direction, the travel direction, and the left and right directions are perpendicular to each other. During the normal working process of the intelligent mowing device 10, the height direction can be the vertical direction, and both the travel direction and the left and right directions can be the horizontal direction, and the travel direction is the forward direction of the intelligent mowing device 10.

### Application Scenario I:

The intelligent mowing device 10 includes a device body 1, which comprises a shell 12 with an upward-facing shell top surface 126. The intelligent mowing device 10 also includes a drive device 2, which is arranged on the device body 1 to drive the movement of the device body 1. The intelligent mowing device 10 further includes an actuator 18, which is arranged on the device body 1 to perform cutting tasks. The intelligent mowing device 10 also comprises an antenna 5 assembled on the device body 1, wherein, the antenna 5 extends upward from the device body and protrudes beyond the shell top surface; the end of the antenna 5 away from the device body 1 is a target end 20a; the line connecting the target end 20a and the highest point of the shell top surface 126 forms a target angle θ with the central axis of the antenna 5, with the target angle θ being between 60° and 75°.

Thereby, when the intelligent mowing device 10 operates on relatively flat terrain, it is ensured that there is sufficient distance between the target end 20a of the antenna 5 and the shell 12 of the intelligent mowing device 10, which can reduce the interference of the shell 12 on the antenna signal, help ensure the ranging precision and ranging distance of the antenna 5, and further ensure the realization of the positioning function of the intelligent mowing device 10. Moreover, it can avoid the height of the antenna 5 being too high, reducing the risk of interference and collision between the antenna 5 and obstacles, and further reducing the risk of damage to the antenna 5, and improving the obstacle-crossing capability of the intelligent mowing device 10. At the same time, it helps reduce the manufacturing cost of the intelligent mowing device 10.

### Application Scenario II:

The intelligent mowing device 10 includes a device body 1, which comprises a shell 12 with an upward-facing shell top surface 126. The intelligent mowing device 10 also includes a drive device 2, which is arranged on the device body 1 to drive the movement of the device body 1. The intelligent mowing device 10 further includes an actuator 18, which is arranged on the device body 1 to perform cutting tasks. The intelligent mowing device comprises an antenna 5 assembled on the device body 1, wherein, the antenna 5 extends upward from the device body 1 and protrudes beyond the shell top surface 126; the end of the antenna 5 away from the device body 1 is a target end 20a; the line connecting the target end 20a and the highest point of the shell top surface 126 forms a target angle θ with the central axis O of the antenna 5, with the target angle θ being between 60° and 75°.

In the height direction, there is a first minimum distance D₁ between the target end 20a and the shell 12, where the first minimum distance D₁ is greater than or equal to 140 mm and less than or equal to 190 mm; in the height direction, there is a second minimum distance D₂ between the target end 20a and the first lens 32, where the second minimum distance D₂ is greater than or equal to 130 mm and less than or equal to 180 mm; and in the height direction, there is a maximum distance W between the target end 20a and the device body 1, where the maximum distance W is greater than or equal to 400 mm and less than or equal to 450 mm.

Through the above approach, the operation of the intelligent mowing device 10 is considered not only on relatively flat terrain, but also on terrains with steep slopes. The antenna 5 has a sufficient height to minimize the degree of interference with the signal of the antenna 5 as much as possible, which is beneficial to ensure the ranging precision and ranging distance of the antenna 5, and further ensure the realization of the positioning function of the intelligent mowing device 10. Moreover, it can avoid the height of the antenna 5 being too high, reducing the risk of interference and collision between the antenna 5 and obstacles, and further reducing the risk of damage to the antenna 5, and improving the obstacle-crossing capability of the intelligent mowing device 10. At the same time, it helps reduce the manufacturing cost of the intelligent mowing device 10.

### Application Scenario III:

Taking lawn mower as an example, the environmental detection device 3 is inclinedly mounted on the device body 1 and exposed through the front side wall of the device body 1. The direction of inclination is gradually backward from the top to the bottom of the device body 1.

The lawn mower drives on the lawn and operates under the drive of the drive device 2 on the device body 1. Through the fisheye lens 42 and TOF optical module 43 in the environmental detection device 3, the image information in front of the device body 1 and the distance information between the device body 1 and the front obstacle are collected. The collected image information and distance information are transmitted to the control unit for further processing. After receiving the image information and distance information from the environmental detection device 3, the control unit can analyze the information, such as human shape recognition, obstacle recognition, etc., in order to obtain the obstacle information in front of the device body 1. Then, based on the obstacle information, it controls the mowing device to change its travel direction to avoid obstacles in front.

The fisheye lens 42, TOF optical module 43, and the fixed base 31 are installed on the device body 1 as a module, which avoids the need for calibration of the fisheye lens 42 and TOF optical module 43 on the device body 1, making the installation easier. After installing the module on the device body 1, the positioning base 44 of the fisheye lens 42 and TOF optical module 43 extends from the front side wall of the shell 12 and is obliquely set, so that the fisheye lens 42 and TOF optical module 43 can be inclined downward to cover the working surface near the position of the device body 1. This reduces the detection blind area of the fisheye lens 42 and TOF optical module 43 near the intelligent mowing device, ensuring that the interference of the shell 12 and other parts of the intelligent mowing device on the field-of-view angle is minimized. To the greatest extent possible within the overall structure of the machine, the AI recognition and obstacle-avoidance functions of the fisheye lens 42 and TOF optical module 43 are realized, avoiding the performance loss caused by most of the field-of-view angle of the fisheye lens 42 and TOF optical module 43 being oriented towards buildings and the sky.

### Application Scenario IV:

Taking lawn mower as an example, the environmental detection device 3 extends to the front end surface of the top of the device body 1. The end surface of the top of the device body 1 can serve as an operation surface, for example, equipped with a display screen, touch screen, touch buttons, etc. The environmental detection device 3 is located in front of the operation surface.

The lawn mower drives on the lawn and operates under the drive of the drive device 2 on the device body 1. Through the first lens 32 in the environmental detection device 3, it collects panoramic images of the surrounding environment and transmits the collected panoramic images to the control unit for further processing. After receiving the images from the environmental detection device 3, the control unit analyzes the information in these images, such as performing AI recognition, etc., in order to obtain security information around the mower, etc.

The field-of-view angle of the environmental detection device 3 deviates from the edge on the front side of the device body 1. This ensures that the edge on the front side of the device body 1 does not block the field-of-view angle of the environmental detection device 3, thereby enabling the environmental detection device 3 to obtain a more comprehensive panoramic image. With the limited field-of-view angle of the environmental detection device 3, it is possible to obtain more comprehensive panoramic image information as much as possible. For example, all image information in the direction of the lawn mower's forward movement can be obtained. After performing human shape recognition, it can prevent safety hazards caused by collisions between the lawn mower and users.

Finally, it should be noted that the above embodiments are only used to illustrate the technical solutions of this disclosure and are not intended to limit them. Although the above embodiments have been described in detail with reference to the foregoing, those skilled in the art should understand that they can still modify the technical solutions recorded in the foregoing embodiments, or equivalently replace some of the technical features; and these modifications or replacements do not depart from the spirit and scope of the technical solutions of the embodiments of this application.

## Claims

1. An intelligent mowing device, comprising:
a device body including a front end and a rear end, an actuator is arranged on the device body;
a first lens arranged at the front end of the top of the device body, the first lens includes a light-transmitting area and collects environmental information through the light-transmitting area;
wherein, there is a first point on the first lens and a second point of the top surface of the device body, the first point corresponds to a contour point at a bottom edge of the light-transmitting area, which is oriented towards the front end, the second point is the highest point of the top surface of the device body located in front of the first lens;
an angle between a line connecting the first point and the second point and the horizontal plane is greater than or equal to a first set acute angle.

2. The intelligent mowing device according to claim 1, wherein the first set acute angle ranges from 5 to 15 degrees.

3. The intelligent mowing device according to claim 1, wherein there is also a third point on the first lens, and there is also a fourth point of the top surface of the device body;
the third point corresponds to the contour point at the bottom edge of the light-transmitting area, which is oriented towards the left side of the device body, and the fourth point is the highest point of the top surface of the device body located on the left side of the first lens; or
the third point corresponds to the contour point at the bottom edge of the light-transmitting area, which is oriented towards the right side of the device body, and the fourth point is the highest point of the top surface of the device body located on the right side of the first lens;
an angle between the line connecting the third point and the fourth point and the horizontal plane is greater than or less than a second set acute angle;
wherein the second set acute angle ranges from 5 to 15 degrees.

4. The intelligent mowing device according to one of claims 1 to 3, wherein a horizontal distance between the first point and the second point is less than or equal to a first preset distance, which ranges from 10 to 200 mm; and wherein the distance from the first point to the top surface of the device body is less than or equal to a second preset distance, which ranges from 10 to 50 mm.

5. The intelligent mowing device according to one of claims 1 to 3, wherein the intelligent mowing device further comprises an environmental detection device;
a front side wall of the device body is an inclined surface that inclines downward and backward from the top edge of the front end of the device body;
the environmental detection device is arranged on the front side wall;
an angle between the front side wall and the vertical plane is less than or equal to a second set acute angle, which ranges from 1 to 40 degrees.

6. The intelligent mowing device according to one of claims 1 to 3, wherein the intelligent mowing device further comprises an antenna;
the antenna is arranged at a left rear end or a right rear end of the top of the device body;
an actuator includes a mowing motor and a mowing blade disc, with the mowing motor driving the mowing blade disc to operate; the mowing motor is positioned between the first lens and the antenna; the horizontal distance from the antenna to the mowing motor is greater than or equal to a third preset distance, which ranges from 100 to 200 mm;
a vertical distance from the top of the antenna to the mowing motor is greater than or equal to a fourth preset distance, which ranges from 100 to 200 mm.

7. The intelligent mowing device according to claim 6, wherein the device body further comprises a drive device;
the drive device includes a drive motor and rear wheels, and the drive motor drives the rear wheels to travel;
the drive motor is arranged between the mowing motor, and the antenna in the travel direction of the device body;
a horizontal distance from the antenna to the drive motor is greater than or equal to a fifth preset distance, which ranges from 50 to 70 mm;
in the working state, a vertical distance from the top of the antenna to the drive motor is greater than or equal to a sixth preset distance, which ranges from 100 to 200 mm.

8. The intelligent mowing device according to claim 7, wherein the device body further comprises a battery;
the battery is arranged between the drive motor and the antenna in the travel direction of the device body;
in the working state, the vertical distance from the top of the antenna to the battery is greater than or equal to a seventh preset distance, which ranges from 150 to 250 mm.

9. The intelligent mowing device according to claim 8, wherein the device body further comprises a communication module;
the communication module is positioned above the battery, and there is a gap between the communication module and the battery; the gap is greater than or equal to a set gap value, which ranges from 5 to 30 mm;
the vertical distance from the communication module to the drive motor is greater than or equal to an eighth preset distance, which ranges from 20 to 60 mm;
a horizontal distance from the communication module to the drive motor is greater than or equal to a ninth preset distance, which ranges from 20 to 60 mm;
a horizontal distance from the communication module to the mowing motor is greater than or equal to a tenth preset distance, which ranges from 100 to 200 mm.

10. An intelligent mowing device, comprising:
a device body including a front end and a rear end;
a first lens arranged at the front end of the top of the device body;
an actuator including a mowing motor and a mowing blade disc, wherein the mowing motor drives the mowing blade disc to operate;
a drive device including a drive motor and rear wheels, and the drive motor drives the rear wheels to move;
a battery for storing energy and providing electrical power;
a communication module arranged above the battery, the communication module is used to provide the function of enabling the device body to communicate with external devices;
an antenna arranged at the rear end of the top of the device body;
wherein the first lens, the mowing motor, the drive motor, the battery, and the antenna are arranged in sequence from the front end to the rear end of the device body.

11. The intelligent mowing device according to claim 10, wherein in the working state of the antenna:
a horizontal distance from the antenna to the mowing motor is greater than or equal to a third preset distance, which ranges from 100 to 200 mm;
a vertical distance from the top of the antenna to the mowing motor is greater than or equal to a fourth preset distance, which ranges from 100 to 200 mm;
a horizontal distance from the antenna to the drive motor is greater than or equal to a fifth preset distance, which ranges from 50 to 70 mm;
a vertical distance from the top of the antenna to the drive motor is greater than or equal to a sixth preset distance, which ranges from 150 to 250 mm;
a vertical distance from the top of the antenna to the battery is greater than or equal to a seventh preset distance, which ranges from 150 to 250 mm.

12. The intelligent mowing device according to claim 10 or 11, wherein
the communication module is positioned above the battery, and there is a gap between the communication module and the battery, the gap ranges from 5 to 30 mm;
a vertical distance from the communication module to the drive motor is greater than or equal to an eighth preset distance, which ranges from 20 to 60 mm;
a horizontal distance from the communication module to the drive motor is greater than or equal to a ninth preset distance, which ranges from 20 to 60 mm;
a horizontal distance from the communication module to the mowing motor is greater than or equal to a tenth preset distance, which ranges from 100 to 200 mm.

13. The intelligent mowing device according to claim 10 or 11, wherein in the working state of the antenna:
when the antenna is arranged at the left rear end of the device body, the distance from the antenna to the left edge of the device body ranges from 50 to 150 mm;
when the antenna is arranged at the right rear end of the device body, the distance from the antenna to the right edge of the device body ranges from 50 to 150 mm;
the distance from the antenna to the rear edge of the device body ranges from 50 to 100 mm.
